(19) Europäisches Patentamt / European Patent Office / Office européen des brevets

(11) **EP 4 636 703 A1**

(12) **EUROPEAN PATENT APPLICATION**
published in accordance with Art. 153(4) EPC

(43) Date of publication:
**22.10.2025 Bulletin 2025/43**

(21) Application number: **24810023.2**

(22) Date of filing: **15.03.2024**

(51) International Patent Classification (IPC):
**G06T 15/50** (2011.01)

(52) Cooperative Patent Classification (CPC):
Y02B 20/40

(86) International application number:
**PCT/CN2024/081856**

(87) International publication number:
**WO 2024/239774 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.05.2023 CN 202310589460**

(71) Applicant: **Tencent Technology (Shenzhen) Company Limited**
**Shenzhen, Guangdong 518057 (CN)**

(72) Inventor: **LIU, Huilong**
**Shenzhen, Guangdong 518057 (CN)**

(74) Representative: **Nederlandsch Octrooibureau**
**P.O. Box 29720**
**2502 LS The Hague (NL)**

(54) **VIRTUAL LIGHT PROCESSING METHOD AND APPARATUS, ELECTRONIC DEVICE, COMPUTER READABLE STORAGE MEDIUM AND COMPUTER PROGRAM PRODUCT**

(57) This application provides a virtual ray processing method and apparatus, an electronic device, a computer-readable storage medium, and a computer program product. The method includes: obtaining a light source position of a virtual light source configured to form a virtual ray in a virtual scene and a light source parameter of the virtual light source; determining a target position in the virtual scene based on the light source position, a connection line between the target position and the virtual light source coinciding with a central virtual ray; determining a target size of a virtual occlusion based on the light source parameter and the target position; generating the virtual occlusion with the target size at the target position in the virtual scene, at least one transparent channel arranged according to an arrangement rule being set on the virtual occlusion; and controlling the virtual light source to illuminate the virtual occlusion, to cause a virtual ray emitted by the virtual light source to pass through the transparent channel, and form graphics satisfying the arrangement rule in the virtual scene.

FIG. 3

**Description**

RELATED APPLICATION

This application is proposed based on and claims priority to Chinese Patent Application No. 202310589460.1, filed on May 23, 2023, which is incorporated herein by reference in its entirety.

FIELD OF THE TECHNOLOGY

The present disclosure relates to the field of computer technologies, and in particular, to a virtual ray processing method and apparatus, an electronic device, a computer-readable storage medium, and a computer program product.

BACKGROUND OF THE DISCLOSURE

With the rapid development of virtual reality technologies, production of virtual scenes is more and more diversified. To provide realistic virtual reality experience for a player, in an application supporting a virtual scene, to enhance expressiveness in the virtual scene, a lighting effect needs to be added to a rendering process.
In the related art, because virtual projection is used when graphic is projected, during projection of some objects or components by some versions of software, a problem that the graphic is incorrect or even a projection is missing may occur. Consequently, there is a large limitation to a version requirement of a running environment in the related art.

SUMMARY

Embodiments of the present disclosure provide a virtual ray processing method and apparatus, an electronic device, a computer-readable storage medium, and a computer program product, to effectively improve universality of a running environment for processing a virtual ray.
Technical solutions of the embodiments of the present disclosure are implemented as follows.
An embodiment of the present disclosure provides a virtual ray processing method, including:

    obtaining a light source position of a virtual light source configured to form a virtual ray in a virtual scene and a light source parameter of the virtual light source;

    determining a target position in the virtual scene based on the light source position, a connection line between the target position and the virtual light source coinciding with a central virtual ray, and the central virtual ray being a central virtual ray in a plurality of virtual rays emitted by the virtual light source;

    determining a target size of a virtual occlusion based on the light source parameter and the target position, the virtual occlusion being configured to block the virtual ray emitted by the virtual light source;

    generating the virtual occlusion with the target size at the target position in the virtual scene, at least one transparent channel arranged according to an arrangement rule being set on the virtual occlusion; and

    controlling the virtual light source to illuminate the virtual occlusion, to cause the virtual ray emitted by the virtual light source to pass through the transparent channel, and form graphics satisfying the arrangement rule in the virtual scene.

An embodiment of the present disclosure provides a virtual ray processing apparatus, including:

    an obtaining module, configured to obtain a light source position of a virtual light source configured to form a virtual ray in a virtual scene and a light source parameter of the virtual light source;

    a position determining module, configured to determine a target position in the virtual scene based on the light source position, a connection line between the target position and the virtual light source coinciding with a central virtual ray, and the central virtual ray being a central virtual ray in a plurality of virtual rays emitted by the virtual light source;

    a size determining module, configured to determine a target size of a virtual occlusion based on the light source parameter and the target position, the virtual occlusion being configured to block the virtual ray emitted by the virtual light source;

    a generation module, configured to generate the virtual occlusion with the target size at the target position in the virtual scene, at least one transparent channel arranged according to an arrangement rule being set on the virtual occlusion; and

    a control module, configured to control the virtual light source to illuminate the virtual occlusion, to cause a virtual ray emitted by the virtual light source to pass through the transparent channel, and form graphics satisfying the arrangement rule in the virtual scene.

An embodiment of the present disclosure provides an electronic device, including:

    a memory, configured to store computer-executable instructions or a computer program; and

a processor, configured to implement, when executing the computer-executable instructions or the computer program stored in the memory, the virtual ray processing method provided in the embodiments of the present disclosure.

An embodiment of the present disclosure provides a computer-readable storage medium, having computer-executable instructions stored therein, the computer-executable instructions, when executed by a processor, implementing the virtual ray processing method provided in the embodiments of the present disclosure.

An embodiment of the present disclosure provides a computer program product, including a computer program or computer-executable instructions, and the computer program or the computer-executable instructions are stored in a computer-readable storage medium. A processor of an electronic device reads the computer-executable instructions from the computer-readable storage medium, and executes the computer-executable instructions, to enable the electronic device to perform the virtual ray processing method provided in the embodiments of the present disclosure.

The embodiments of the present disclosure have the following beneficial effects.

A light source position and a light source parameter of a virtual light source are obtained, a target size of a virtual occlusion is determined based on the light source position and the light source parameter, the virtual occlusion with the target size is generated at a target position in a virtual scene, and the virtual light source is controlled to illuminate the virtual occlusion, so that a virtual ray emitted by the virtual light source passes through a transparent channel, to form graphics satisfying an arrangement rule in the virtual scene. In this way, the virtual occlusion with the target size is placed at the target position in the virtual scene through physical parameters in the virtual scene such as the light source position and the light source parameter in the virtual scene. Because the virtual occlusion is provided with the transparent channel arranged according to the arrangement rule, the virtual occlusion placed at the target position can selectively block the virtual ray, to form the graphics satisfying the arrangement rule in the virtual scene. The placed virtual occlusion can satisfy a blocking requirement of the virtual ray, and corresponding physical parameters of the virtual scene are unchanged in different running environments, so that the placed virtual occlusion can be applicable to different running environments, thereby effectively improving universality of a running environment for processing a virtual ray.

BRIEF DESCRIPTION OF THE DRAWINGS

FIG. 1 is a schematic architectural diagram of a virtual ray processing system according to an embodiment of the present disclosure.

FIG. 2 is a schematic structural diagram of an electronic device configured to process a virtual ray according to an embodiment of the present disclosure.

FIG. 3 is a schematic flowchart 1 of a virtual ray processing method according to an embodiment of the present disclosure.

FIG. 4 is a schematic flowchart 2 of a virtual ray processing method according to an embodiment of the present disclosure.

FIG. 5 is a schematic flowchart 3 of a virtual ray processing method according to an embodiment of the present disclosure.

FIG. 6 is a schematic flowchart 4 of a virtual ray processing method according to an embodiment of the present disclosure.

FIG. 7 is a schematic principle diagram 1 of a virtual ray processing method according to an embodiment of the present disclosure.

FIG. 8 is a schematic principle diagram 1 of a two-dimensional virtual occlusion according to an embodiment of the present disclosure.

FIG. 9 is a schematic principle diagram 2 of a two-dimensional virtual occlusion according to an embodiment of the present disclosure.

FIG. 10 is a schematic principle diagram 2 of a virtual ray processing method according to an embodiment of the present disclosure.

FIG. 11 is a schematic effect diagram of a three-dimensional virtual occlusion according to an embodiment of the present disclosure.

FIG. 12 is a schematic principle diagram 1 of a two-dimensional virtual occlusion according to an embodiment of the present disclosure.

FIG. 13 is a schematic principle diagram of a three-dimensional virtual occlusion according to an embodiment of the present disclosure.

FIG. 14 is a schematic effect diagram of a virtual ray processing method according to an embodiment of the present disclosure.

FIG. 15 is a schematic flowchart 5 of a virtual ray processing method according to an embodiment of the present disclosure.

FIG. 16 is a schematic flowchart 6 of a virtual ray processing method according to an embodiment of the present disclosure.

FIG. 17 is a schematic principle diagram of a cuboid in a virtual ray processing method according to an embodiment of the present disclosure.

FIG. 18 is a schematic principle diagram 3 of a virtual ray processing method according to an embodiment of the present disclosure.

FIG. 19 is a schematic flowchart 7 of a virtual ray processing method according to an embodiment of the present disclosure.

DESCRIPTION OF EMBODIMENTS

To make the objectives, technical solutions, and advantages of the present disclosure clearer, the following further describes the present disclosure in detail with reference to the accompanying drawings. The described embodiments are not to be considered as a limitation to the present disclosure. All other embodiments obtained by a person of ordinary skill in the art without creative efforts shall fall within the protection scope of the present disclosure.

In the following descriptions, related "some embodiments" describe a subset of all possible embodiments. However, the "some embodiments" may be the same subset or different subsets of all the possible embodiments, and may be combined with each other without conflict.

The terms, involved in the following descriptions, "first/second/ third" are merely intended to distinguish between similar objects rather than describing specific orders. The "first/second/ third" is interchangeable in proper circumstances to enable the embodiments of the present disclosure to be implemented in other orders than those illustrated or described herein.

Unless otherwise defined, meanings of all technical and scientific terms used herein are the same as those usually understood by a person skilled in the art to which the present disclosure belongs. Terms used herein are merely intended to describe the embodiments of the present disclosure, but are not intended to limit the present disclosure.

Before the embodiments of the present disclosure are further described in detail, terms involved in the embodiments of the present disclosure are described. The terms involved in the embodiments of the present disclosure are applicable to the following explanations.

(1) In response to: It is configured for representing a condition or a status on which an operation to be performed depends. When the condition or the status on which the operation depends is met, one or more performed operations may be in real time or may have a set delay. Unless otherwise specified, there is no restriction on an order of performing a plurality of performed operations.

(2) Virtual scene: It is a virtual scene displayed or provided when an application is run on a terminal. The virtual scene may be a simulated environment of the real world, or may be a semi-simulated and semi-fictional virtual environment, or may be a completely fictional virtual environment. The virtual scene may be any one of a two-dimensional virtual scene, a 2.5-dimensional virtual scene, or a three-dimensional virtual scene. The embodiments of the present disclosure do not limit the dimension of the virtual scene. For example, the virtual scene may include the sky, the land, the ocean, or the like. The land may include environmental elements such as the desert and a city. A user may control the virtual object to move in the virtual scene.

(3) Virtual object: It is an image of various people and articles that can be interacted with in the virtual scene, or a movable object in the virtual scene. The movable object may be a virtual person, a virtual animal, a cartoon person, or the like, for example, a person, an animal, a plant, an oil barrel, a wall, or a rock displayed in the virtual scene. The virtual object may be a virtual image configured for representing the user in the virtual scene. The virtual scene may include a plurality of virtual objects, and each virtual object has a shape and a volume in the virtual scene, and occupies some space in the virtual scene. The virtual object may be a user character controlled through an operation performed on a client, or artificial intelligence (AI) set in a battle in the virtual scene through training, or a non-player character (NPC) set in interaction in the virtual scene. The virtual object may be a virtual person for adversarial interaction in the virtual scene. A quantity of virtual objects participating in the interaction in the virtual scene may be preset or dynamically determined based on a quantity of clients participating in the interaction.

(4) Game program: The game program may be any one of a massively multiplayer online role-playing game (MMORPG), a first-person shooting (FPS) game, a third-person shooting game, a multiplayer online battle arena (MOBA) game, a virtual reality application, a three-dimensional map program, a simulation program, or a multiplayer gunfight survival game.

(5) Augmented reality (AR): It is a technology that skillfully integrates virtual information with the real world. It simulates computer-generated virtual information such as text, images, three-dimensional models, music, and videos by extensively using a variety of technical means such as multimedia, three-dimensional modeling, real-time registration, intelligent interaction, and sensing, and then applies the virtual information to the real world. Two types of information complement each other to "augment" the real world. The augmented reality technology is also referred to as augmented reality. The AR technology is a new technology that integrates real-world information and virtual-world information content. It simulates and processes physical information that was originally difficult to experience in the spatial scope of the real world based on computers and other scientific technologies, and effectively applies virtual information content in the real world. In addition, in the process, the virtual information content can be perceived by human senses, thereby achieving a sensory experience beyond reality. After a real environment and a virtual item overlap, the real environment and the virtual item can exist in a same image and space at the same time.

(6) Virtual camera: It is a "video camera" set up in computer animation software or a virtual engine. A function of the virtual camera in expressing viewpoints during animation is equivalent to a conventional video camera. Subjects of the virtual camera and a physical camera are completely different, but functions are extremely similar. The physical camera shoots real people or an actually built scene, and the virtual camera shoots a model built in three-dimensional software, which can achieve unlimited possibilities. The virtual camera is presented in a form of an icon in the virtual engine, and also have parameters such as a lens, a focal length, a focus, an aperture, and a depth of field. The virtual camera can implement camera actions such as "push, pull, shake, move, follow, swing, rise, fall, and comprehensive movement", and can achieve shooting effects that are difficult or even impossible to achieve for the physical camera, such as: passing through a wall, passing through a key hole, and passing through an item. Parameters of the physical camera that need to be adjusted are distributed on a body of the physical camera and need to be manually operated. A camera parameter of the virtual camera is a button or a value input bar integrated on a panel. An operator only needs to enter a parameter or drag a mouse, and sometimes a motion path of the virtual camera may be determined through several key frames. During actual shooting, the physical camera usually needs a stabilizer or a motion control system, even in this way, shake of a picture still exists.

(7) Virtual engine: The virtual engine refers to core components of some editable computer virtual systems or some interactive real-time image applications that have been written. The systems provide various tools required for writing a virtual scene for a designer of the virtual scene, and aim at enabling the designer to easily and quickly write a program. The virtual engine includes a rendering engine (where the rendering engine includes a two-dimensional rendering engine and a three-dimensional rendering engine), a physical engine, a collision detection engine, a sound effect engine, a script engine, an animation engine, an artificial intelligence engine, a network engine, a scene management engine, and the like.

(8) Virtual light source: It is a "light source" set up in the computer animation software or the virtual engine. A function of the virtual light source for expressing viewpoints during animation production is equivalent to a conventional physical light source. Objects illuminated by the virtual light source are totally different from objects illuminated by the physical light source, but functions are extremely similar. The physical light source illuminates real people or an actually built scene, and the virtual light source illuminates a model built in the three-dimensional software, which can implement unlimited possibilities.

(9) Virtual ray: It is a ray in a virtual scene emitted by the virtual light source configured to illuminate the virtual scene. The virtual ray includes a direct ray and an indirect ray. The direct ray is a virtual ray emitted by the virtual light source and reflected to the virtual camera by a virtual illumination point. The indirect ray is a virtual ray emitted by the virtual light source to a virtual illumination point after being reflected at least once, and finally reflected to the virtual camera by the virtual illumination point.

(10) Virtual production: The virtual production is broad term, and refers to a series of computer-assisted film production and visual film production methods. Some common definitions of the virtual production are first described. According to the definition of Weta Digital, "Virtual production is where the physical and digital worlds meet." The virtual production combines virtual reality and augmented reality with computer-generated imagery (CGI) and game engine technologies, so that production personnel can see that scenes are expanded in front of them, as if the scenes are synthesized and shot in a real scene.

(11) Digital multiplex (DMX) light: Actually, the DMX light is a device responsible for receiving and executing a command based on received data. This may mean turning on or turning off a light source or rotating the device by 90 degrees. There are many types of DMX lights, ranging from a standard stage light with a simple switch to an intelligent light that can rotate in multiple directions and has an optical filter. Each light has a group of predefined attributes/commands at a hardware level. The attributes are classified into groups named odes. Many lights include multiple modes, and the modes predefine an available attribute to which the light is to respond. A light manufacturer provides different mode options for the user, so that the user can adapt to various use cases, as many functions as possible are included, and the user is allowed to select a function most important to the user. In this way, a simplest and smallest channel counting mode is formed; a complex and massive channel mode is formed; and some intermediate modes are formed. In professional illumination practice, an intermediate mode is selected at many times, to balance a function and ease of control and use a number of DMX channels more economically. Each mode includes a group of attributes. The attribute is responsible for informing hardware how to respond to received DMX data. In most cases, all attributes of a specific light can be found in a light manual accompanying the light.

In an implementation process of the embodiments of the present disclosure, the applicant finds that the following problems exist in the related art.

In the related art, because virtual projection is used when graphic is projected, during projection of some objects or components by some versions of software, a problem that the graphic is incorrect or even a projection is missing may occur. Consequently, there is a large limitation to a version requirement of a running environment in the related art. According to the embodiments of the present disclosure, a graphic projection manner may be implemented completely based on a method of physical illumination of light in the unreal engine, and is applicable to running environments of all versions, thereby effectively improving universality of a running environment for processing a virtual ray.

The embodiments of the present disclosure provide a virtual ray processing method and apparatus, an electronic device, a computer-readable storage medium, and a computer program product, to effectively improve universality of a running environment for processing a virtual ray. The following describes an exemplary application of a virtual ray processing system provided in the embodiments of the present disclosure.

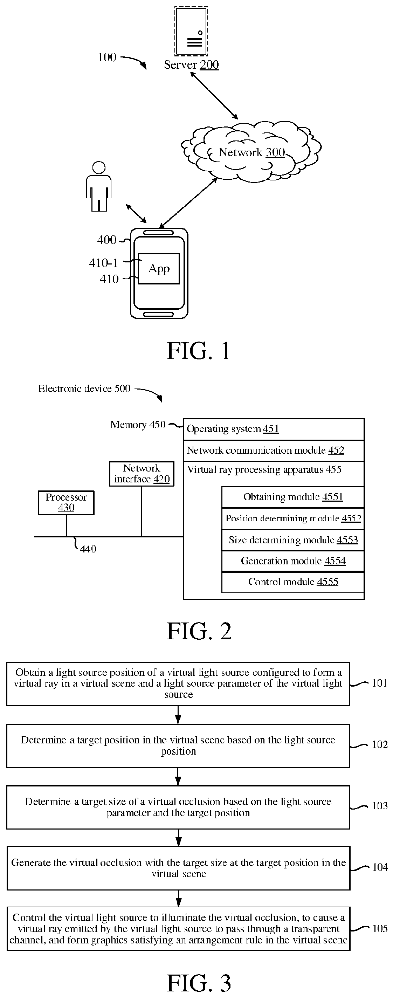

FIG. 1 is a schematic architectural diagram of a virtual ray processing system 100 according to an embodiment of the present disclosure. A terminal (where a terminal 400 is exemplarily shown) is connected to a server 200 by a network 300. The network 300 may be a wide area network, a local area network, or a combination of thereof.

The terminal 400 may be configured for a user to use a client 410, and may display a virtual scene on a graphic interface 410-1 (where the graphical interface 410-1 may be exemplarily shown). The terminal 400 and the server 200 may be connected to each other by a wired or wireless network.

The server 200 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform. The terminal 400 may be a smartphone, a tablet computer, a laptop, a desktop computer, a smart speaker, a smart television, a smartwatch, an in-vehicle terminal, or the like, but may be not limited thereto. The electronic device provided in the embodiments of the present disclosure may be implemented as a terminal, or may be implemented as a server. The terminal and the server may be connected directly or indirectly in a wired or wireless communication manner, which may be not limited in the embodiments of the present disclosure.

The virtual ray processing method provided in the embodiments of the present disclosure may be applicable to application scenarios such as the virtual production and game production.

For example, in the application scenario of the virtual production, a light special effect may be usually needed, to form graphic satisfying a corresponding arrangement rule in a produced video. Because producing a corresponding light special effect in the real world usually needs to reconfigure or upgrade a light source in the real world, production costs may be large. According to the virtual ray processing method provided in the embodiments of the present disclosure, the corresponding light special effect can be produced in various versions of production engines, thereby effectively improving universality of a running environment for processing a virtual ray and effectively reducing production costs. When the terminal 400 is used to perform virtual production, in response to an operation performed by a producer on the graphic interface 400-1, the terminal 400 may determine a light source position of a virtual light source configured to form a virtual ray in the produced video, and arranges the virtual light source with a corresponding light source parameter at the light source position. In response to a light special effect triggering operation performed by the producer on the virtual light source, the terminal 400 may determine a target size of a virtual occlusion based on the light source parameter and a target position, generates a virtual occlusion with the target size at the target position in the produced video, and controls the virtual light source to illuminate the virtual occlusion, so that the virtual ray emitted by the virtual light source passes through a transparent channel, to form graphic satisfying an arrangement rule (that is, the light special effect) in the produced video.

For another example, in the application scenario of the game production, a light special effect may be usually needed, to form graphic satisfying a corresponding arrangement rule in a produced virtual game scene, so that the produced game may be more vivid. In the virtual ray processing method provided in the embodiments of the present disclosure, when the terminal 400 is used to produce a game, in response to an operation performed by a producer on the graphic interface 400-1, the terminal 400 may determine a light source position of a virtual light source configured to form a virtual ray in the virtual game scene, and arranges the virtual light source with a corresponding light source parameter at the light source position. In response to a light special effect triggering operation performed by the producer on the virtual light source, the terminal 400 may determine a target size of a virtual occlusion based on the light source parameter and a target position, generates a virtual occlusion with the target size at the target position in the virtual game scene, and controls the virtual light source to illuminate the virtual occlusion, so that the virtual ray emitted by the virtual light source passes through a transparent channel, to form graphics satisfying an arrangement rule in the virtual game scene.

The terminal 400 obtains a light source position and a light source parameter of a virtual light source, may determine a target position in a virtual scene based on the light source position, may determine a target size of a virtual occlusion based on the target position and the light source parameter, generates the virtual occlusion with the target size at the target position in the virtual scene, and controls the virtual light source to illuminate the virtual occlusion, so that a virtual ray emitted by the virtual light source passes through a transparent channel, to form graphics satisfying an arrangement rule in the virtual scene.

In some other embodiments, the server 200 obtains a light source position and a light source parameter of a virtual light source, may determine a target position in a virtual scene based on the light source position, may determine a target size of a virtual occlusion based on the target position and the light source parameter, and sends the target position and the target size to the terminal 400. The terminal 400 generates the virtual occlusion with the target size at the target position in the virtual scene, and controls the virtual light source to illuminate the virtual occlusion, so that a virtual ray emitted by the virtual light source passes through a transparent channel, to form graphics satisfying an arrangement rule in the virtual scene.

In some other embodiments, the embodiments of the present disclosure may be implemented by using a cloud technology. The cloud technology refers to a hosting technology that unifies a series of resources such as hardware, software, and networks within a wide area network or a local area network to implement computing, storage, processing, and sharing of data.

The cloud technology may be a generic term of a network technology, an information technology, an integration technology, a management platform technology, and an application technology based on application of a cloud computing business mode, and may form a resource pool and may be used on demand, which may be flexible and convenient. The cloud computing technology will become an important support. Backend services of a technology network system require a lot of computing and storage resources.

FIG. 2 is a schematic structural diagram of an electronic device 500 configured to process a virtual ray according to an embodiment of the present disclosure. The electronic device 500 shown in FIG. 2 may be the server 200 or the terminal 400 in FIG. 1. The electronic device 500 shown in FIG. 2 may include: at least one processor 430, a memory 450, and at least one network interface 420. Components in the electronic device 500 may be coupled together through a bus system 440. The bus system 440 may be configured to achieve connected communication between the components. In addition to a data bus, the bus system 440 further may include a power supply bus, a control bus, and a status signal bus. However, for clarity, various buses may be marked as the bus system 440 in FIG. 2.

The processor 430 may be an integrated circuit chip having a signal processing capability, for example, a general purpose processor, a digital signal processor (DSP), another programmable logic device, discrete gate or transistor logic device, or discrete hardware component, or the like. The general purpose processor may be a microprocessor or any conventional processor, or the like.

The memory 450 may be removable, irremovable or a combination thereof. For example, a hardware device may include a solid memory, a hard disk drive, an optical disk drive, and the like. The memory 450 may include one or more storage devices located physically away from the processor 430.

The memory 450 may include a volatile memory or a non-volatile memory, or may include both the volatile memory and the non-volatile memory. The non-volatile memory may be a read-only memory (ROM), and the volatile memory may be a random-access memory (RAM). The memory 450 described in this embodiment of the present disclosure aims to include any suitable type of memory.

The memory 450 can store data to support various operations. Examples of the data include a program, a module, a data structure, or a subset or a superset thereof, which may be described below by way of example.

An operating system 451 may include system programs configured to process various basic system services and perform hardware-related tasks, for example, a framework layer, a core library layer, and a driver layer, which may be configured to implement various basic services and process hardware-based tasks.

A network communication module 452 may be configured to reach another electronic device via one or more (wired or wireless) network interfaces 420. For example, the network interface 420 may include: Bluetooth, wireless fidelity (Wi-Fi), a universal serial bus (USB), and the like.

The virtual ray processing apparatus provided in the embodiments of the present disclosure may be implemented by software. FIG. 2 shows a virtual ray processing apparatus 455 stored in the memory 450, which may be software in a form of a program and a plug-in, and may include the following software modules: an obtaining module 4551, a position determining module 4552. a size determining module 4553, a generation module 4554, and a control module 4555. These modules may be logical modules, and therefore may be combined in different manners to form other embodiments or further split according to the implemented functions. The functions of the modules may be described below.

In some other embodiments, the virtual ray processing apparatus provided in the embodiments of the present disclosure may be implemented by using hardware. In an example, the virtual ray processing apparatus provided in the embodiments of the present disclosure may be a processor in a form of a hardware decoding processor, programmed to perform the virtual ray processing method provided in the embodiments of the present disclosure. For example, the processor in the form of the hardware decoding processor may use one or more application specific integrated circuits (ASIC), a DSP, a programmable logic device (PLD), a complex programmable logic device (CPLD), a field-programmable gate array (FPGA), or other electronic components.

The terminal or the server may implement the virtual ray processing method provided in the embodiments of the present disclosure by executing a computer program or computer-executable instructions. For example, the computer program may be a native program (for example, a dedicated virtual ray processing program) in an operating system or a software module, for example, a virtual ray processing module that may be embedded in any program (such as an instant messaging client, an album program, an electronic map client, or a navigation client); or may be a native application (APP), that is, a program that needs to be installed in the operating system for running. In summary, the computer program may be an application, a module, or a plug-in in any form.

The virtual ray processing method provided in the embodiments of the present disclosure may be described in combination with the exemplary applications and implementations of the server or the terminal provided in the embodiments of the present disclosure.

FIG. 3 is a schematic flowchart 1 of a virtual ray processing method according to an embodiment of the present disclosure. Descriptions may be provided with reference to operation 101 to operation 105 shown in FIG. 3. The virtual ray processing method provided in this embodiment of the present disclosure may be independently implemented by a server or a terminal, or may be cooperatively implemented by a server and a terminal. The following describes an example in which the server independently implements the method.

Operation 101: Obtain a light source position of a virtual light source configured to form a virtual ray in a virtual scene and a light source parameter of the virtual light source.

The light source position may be configured for indicating three-dimensional position coordinates of the virtual light source in the virtual scene in a coordinate system of the virtual scene, namely, a three-dimensional coordinate position of a geometric center of the virtual light source in the virtual scene in the coordinate system of the virtual scene. The virtual light source may be configured to form the virtual ray in the virtual scene.

The virtual light source may be a "light source" set up in the computer animation software or the virtual engine. A function of the virtual light source for expressing viewpoints during animation production may be equivalent to a conventional physical light source. Objects illuminated by the virtual light source may be totally different from objects illuminated by the physical light source, but functions may be extremely similar. The physical light source illuminates real people or an actually built scene, and the virtual light source illuminates a model built in the three-dimensional software, which can implement unlimited possibilities.

The virtual ray may be a ray in a virtual scene emitted by the virtual light source configured to illuminate the virtual scene. The virtual ray may include a direct ray and an indirect ray. The direct ray may be a virtual ray emitted by the virtual light source and reflected to the virtual camera by a virtual illumination point. The indirect ray may be a virtual ray emitted by the virtual light source to a virtual illumination point after being reflected at least once, and finally reflected to the virtual camera by the virtual illumination point.

The light source parameter may include an illumination open angle of the virtual light source, and the illumination open angle may be configured for indicating an angle between a boundary virtual ray and a central virtual ray that may be emitted by the virtual light source.

Operation 102: Determine a target position in the virtual scene based on the light source position.

A connection line between the target position and the virtual light source coincides with the central virtual ray, the central virtual ray may be a central virtual ray in a plurality of virtual rays emitted by the virtual light source, and the target position may be a position located on the central virtual ray.

The connection line between the target position and the virtual light source may be a connection line between the target position and a central position of the virtual light source.

The central virtual ray may be the central virtual ray in the plurality of virtual rays emitted by the virtual light source. The plurality of virtual rays emitted by the virtual light source include two edge virtual rays and one central virtual ray. The edge virtual ray may be a virtual ray with another virtual ray on one side and without a virtual ray on the other side, and distances between the central virtual ray and the two edge virtual rays may be equal.

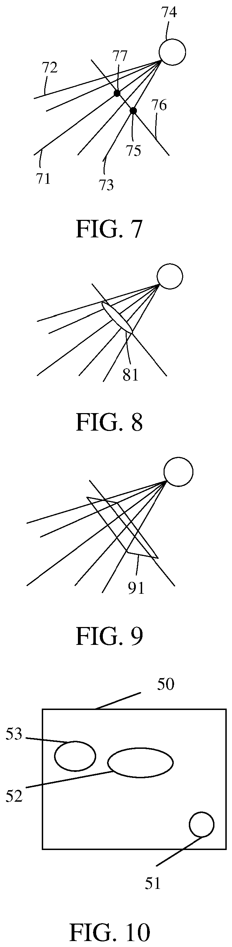

In an example, FIG. 7 is a schematic principle diagram 1 of a virtual ray processing method according to an embodiment of the present disclosure, a plurality of virtual rays emitted by a virtual light source 74 include a central virtual ray 71, an edge virtual ray 72, and an edge virtual ray 73.

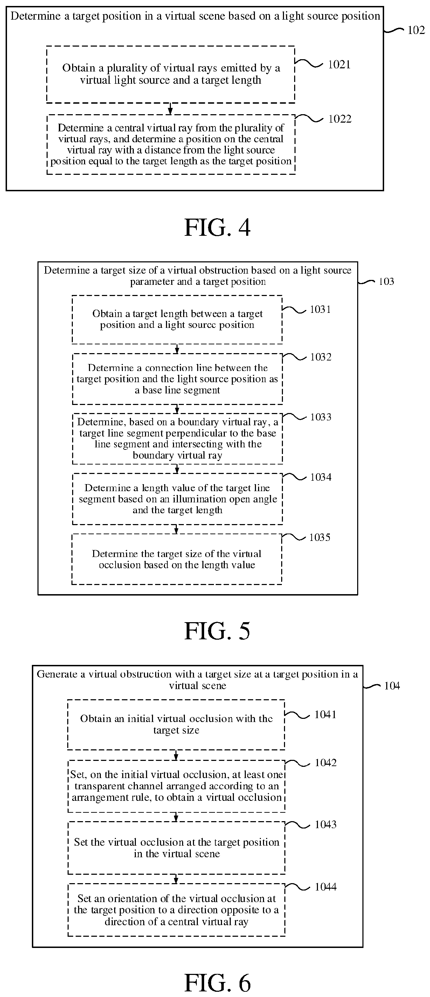

In some embodiments, FIG. 4 is a schematic flowchart 2 of a virtual ray processing method according to an embodiment of the present disclosure, and operation 102 shown in FIG. 3 may be implemented by performing operation 1021 and operation 1022 shown in FIG. 4.

Operation 1021: Obtain a plurality of virtual rays emitted by the virtual light source and a target length.

The target length may be less than a length of the central virtual ray.

The length of the central virtual ray may be a length of the central virtual ray in the virtual scene. A start point of the central virtual ray may be the virtual light source emitting the central virtual ray, an end point of the central virtual ray may be a scene position to which the central virtual ray may be emitted in the virtual scene, the central virtual ray may be a straight line in the virtual scene, and the central virtual ray does not include a reflected ray of the central virtual ray at the scene position.

In an example, referring to FIG. 7, the plurality of virtual rays, for example, five virtual rays (including the edge virtual ray 72, the edge virtual ray 73, and the central virtual ray 71) shown in FIG. 7, emitted by the virtual light source 74 may be obtained.

Operation 1022: Determine the central virtual ray from the plurality of virtual rays, and determine a position on the central virtual ray with a distance from the light source position equal to the target length as the target position.

The determining the central virtual ray from the plurality of virtual rays may be implemented in the following manner: performing the following processing on each virtual ray: determining the virtual ray as a candidate virtual ray when there are two other virtual rays adjacent to the virtual ray; and determining the candidate virtual ray as the central virtual ray when quantities of other virtual rays on two sides of the candidate virtual ray may be equal.

In an example, referring to FIG. 7, for the virtual ray 71, there may be two other virtual rays adjacent to the virtual ray 71, the virtual ray 71 may be determined as the candidate virtual ray, and there may be two other virtual rays on both sides of the candidate virtual ray 71. That is, there may be equal quantities of other virtual rays on both sides of the candidate virtual ray 71, and the candidate virtual ray 71 may be determined as a central virtual ray.

In an example, referring to FIG. 7, the central virtual ray 71 is determined from the plurality of virtual rays, and a position on the central virtual ray 71 with a distance from the light source position 74 equal to a target length may be determined as a target position 77.

In this way, the target position in the virtual scene may be determined based on the light source position, facilitating subsequently setting a virtual occlusion at the target position, so that the virtual occlusion blocks the virtual ray emitted by the virtual light source. The manner of setting a physical occlusion in the virtual scene may be applicable to various application scenarios, and can effectively improve scene universality of processing a virtual ray.

Operation 103: Determine a target size of the virtual occlusion based on the light source parameter and the target position.

The virtual occlusion may be configured to block the virtual ray emitted by the virtual light source, and the virtual ray emitted by the virtual light source cannot pass through a blocking surface of the virtual occlusion.

The light source parameter may include an illumination open angle of the virtual light source, and the illumination open angle may be configured for indicating an angle between the boundary virtual ray and the central virtual ray that may be emitted by the virtual light source.

The boundary virtual ray may be a virtual ray located at an edge of the plurality of virtual rays emitted by the virtual light source, and the boundary virtual ray may be a virtual ray with only one adjacent virtual ray in the plurality of virtual rays emitted by the virtual light source.

The boundary virtual ray may be determined in the following manner: for each of the plurality of virtual rays, obtaining a quantity of other virtual rays adjacent to the virtual ray, and determining the virtual ray as the boundary virtual ray when the quantity is 1.

In an example, referring to FIG. 7, the boundary virtual ray may be the virtual ray 72 and the virtual ray 73 in the plurality of virtual rays emitted by the virtual light source 74.

In an example, referring to FIG. 7, the illumination open angle of the virtual light source may be configured for indicating an angle between the boundary virtual ray 73 and the central virtual ray 71 that may be emitted by the virtual light source.

FIG. 5 is a schematic flowchart 3 of a virtual ray processing method according to an embodiment of the present disclosure, and operation 103 shown in FIG. 3 may be implemented by performing operation 1031 to operation 1035 shown in FIG. 5.

Operation 1031: Obtain a target length between the target position and the light source position.

The target length may be configured for indicating a distance length between the target position and the light source position.

Operation 1032: Determine a connection line between the target position and the light source position as a base line segment.

In an example, referring to FIG. 7, a connection line between the target position 77 and the light source position 74 may be determined as a base line segment, and the distance length may be a line segment length of the base line segment.

Operation 1033: Determine, based on the boundary virtual ray, a target line segment perpendicular to the base line segment and intersecting with the boundary virtual ray.

Line segment endpoints of the target line segment may be respectively located on the boundary virtual ray and the base line segment, and the target line segment and the boundary virtual ray may be in a one-to-one correspondence, that is, one boundary virtual ray corresponds to one target line segment. Operation 1033 may be implemented in the following manner: obtaining a target line perpendicular to the base line segment, and determining an intersection point between the boundary virtual ray and the target line; and determining a line segment from the intersection point on the target line to the target position as the target line segment.

In an example, referring to FIG. 7, a target line 76 perpendicular to the base line segment (namely, the connection line between the target position 77 and the light source position 74) may be obtained, an intersection point 75 between the boundary virtual ray and the target line may be determined, and a line segment from the intersection point 75 on the target line 76 to the target position 77 may be determined as the target line segment.

Operation 1034: Determine a length value of the target line segment based on the illumination open angle and the target length.

In an example, referring to FIG. 7, based on the illumination open angle (namely, the angle between the boundary virtual ray 73 and the central virtual ray 71) and the target length (namely, the distance length between the target position 77 and the light source position 74), a length value of the target line segment (namely, the line segment between the intersection point 75 on the target line 76 and the target position 77) may be determined.

Operation 1034 may be implemented in the following manner: obtaining an included angle between the boundary virtual ray and the target line segment, and determining a cosine value of the included angle; obtaining a cosine value of the illumination open angle, and determining a ratio of the cosine value of the illumination open angle to the cosine value of the included angle; and determining an integer multiple of a product of the target length and the ratio as the length value of the target line segment.

In an example, referring to FIG. 7, an included angle between the boundary virtual ray 73 and the target line segment 76 may be obtained, and a cosine value of the included angle may be determined; a cosine value of the illumination open angle (namely, the angle between the boundary virtual ray 73 and the central virtual ray 71) may be obtained, and a ratio of the cosine value of the illumination open angle (namely, the angle between the boundary virtual ray 73 and the central virtual ray 71) to the cosine value of the included angle may be determined; and an integer multiple of a product of the target length (namely, the distance length between the target position 77 and the light source position 74) and the ratio may be determined as the length value of the target line segment.

In an example, an expression of the length value of the target line segment may be:

$$ b = kc\frac{sinB}{sinC} \qquad (1) $$

b may be configured for indicating a length value of a target line segment, C may be configured for indicating a target length, sinB may be configured for indicating a cosine value of an illumination open angle, sinC may be configured for indicating a cosine value of an included angle, and k may be configured for indicating a positive integer.

Operation 1035: Determine the target size of the virtual occlusion based on the length value.

The target size may include a two-dimensional target size or a three-dimensional target size. The target size of the virtual occlusion may be configured for indicating a size of an area or a volume occupied by the virtual occlusion in the virtual scene. The two-dimensional target size may be configured for indicating the size of the area occupied by the virtual occlusion in the virtual scene. The three-dimensional target size may be configured for indicating the size of the volume occupied by the virtual occlusion in the virtual scene.

Operation 1035 may be implemented in the following manner: determining a dimension of the virtual occlusion in response to a dimension selection operation for the virtual occlusion; and determining the two-dimensional target size of the virtual occlusion based on the length value when the dimension of the virtual occlusion is two-dimensional; or determining the three-dimensional target size of the virtual occlusion based on the length value when the dimension of the virtual occlusion is three-dimensional.

When a selected dimension of the virtual occlusion is two-dimensional, the corresponding virtual occlusion may be a two-dimensional virtual occlusion. Because memory space occupation of the two-dimensional virtual occlusion in the virtual scene may be less than memory space occupation of a three-dimensional virtual occlusion (in a case that an area of a bottom surface of the three-dimensional virtual occlusion may be equal to an area of the two-dimensional virtual occlusion), selecting the two-dimensional virtual occlusion to block the virtual ray emitted by the virtual light source can significantly reduce memory space occupation of the virtual scene, and effectively improve processing efficiency of the virtual ray.

When a selected dimension of the virtual occlusion is three-dimensional, the corresponding virtual occlusion may be a three-dimensional virtual occlusion. Because memory space occupation of the three-dimensional virtual occlusion in the virtual scene may be larger, but compared with the two-dimensional virtual occlusion, a plurality of side surfaces may be added to the three-dimensional virtual occlusion, so that the virtual ray emitted by the virtual light source can be more effectively blocked, and another virtual ray caused by diffuse reflection of the virtual ray can be effectively blocked, thereby effectively improving a ray blocking effect of the virtual occlusion.

The determining the two-dimensional target size of the virtual occlusion based on the length value may be implemented in the following manner: determining a shape of the virtual occlusion in response to a shape selection operation for the virtual occlusion; and when the shape of the virtual occlusion is a circle and the two-dimensional target size may include a radius of the circle, determining the length value as the radius of the circle; or when the shape of the virtual occlusion may be a rectangle and the two-dimensional target size may include a side length of the rectangle, determining an integer multiple of the length value as the side length of the rectangle.

In an example, FIG. 8 is a schematic principle diagram 1 of a two-dimensional virtual occlusion according to an embodiment of the present disclosure. When a shape of a virtual occlusion 81 is a circle and a two-dimensional target size may include a radius of the circle, a length value may be determined as the radius of the circle.

In an example, FIG. 9 may be a schematic principle diagram 2 of a two-dimensional virtual occlusion according to an embodiment of the present disclosure. When a shape of a virtual occlusion 91 is a rectangle and a two-dimensional target size may include a side length of the rectangle, an integer multiple of a length value may be determined as the side length of the rectangle.

When the shape of the virtual occlusion is the rectangle, the two-dimensional target size may include the side length of the rectangle, the side length of the rectangle may include a length of the rectangle and a width of the rectangle. The length of the rectangle and the width of the rectangle may be equal or not equal. When the length of the rectangle is equal to the width of the rectangle, a third integer multiple of the length value may be determined as the length of the rectangle, a fourth integer multiple of the length value may be determined as the width of the rectangle, and the third integer multiple may be equal to the fourth integer multiple. When the length of the rectangle is not equal to the width of the rectangle, a fifth integer multiple of the length value may be determined as the length of the rectangle, a sixth integer multiple of the length value may be determined as the width of the rectangle, and the fifth integer multiple may be not equal to the sixth integer multiple.

When the virtual occlusion is a cuboid, the three-dimensional target size may include a length, a height, and a width of the cuboid.

The determining the three-dimensional target size of the virtual occlusion based on the length value may be implemented in the following manner: determining a first integer multiple of the length value of the target line segment as the length of the cuboid, and determining a second integer multiple of the length value of the target line segment as the width of the cuboid; obtaining an illumination intensity of the virtual light source, dividing the illumination intensity by a reference illumination intensity, and determining a division result as a target multiple of the length value of the target line segment; and determining the length value of the target multiple as the height of the cuboid.

A larger illumination intensity of the virtual light source indicates a larger value of a corresponding target multiple, a smaller illumination intensity of the virtual light source indicates a smaller value of a corresponding target multiple, and the illumination intensity of the virtual light source may be positively correlated with the value of the corresponding target multiple.

In an example, an expression of the target multiple of the length of the target line segment may be:

$$B = \frac{G}{G_1} \qquad (2)$$

B may be configured for indicating a target multiple of a length of a target line segment, G may be configured for indicating an illumination intensity of a virtual light source, and $G_1$ may be configured for indicating a reference illumination intensity.

In this way, the virtual occlusion may be set to the three-dimensional virtual occlusion, and the height of the three-dimensional virtual occlusion may be set to a height positively correlated with the illumination intensity of the virtual light source, so that the three-dimensional virtual occlusion of an appropriate height can block a reflected virtual ray generated through diffuse reflection of the virtual ray of the virtual light source, to effectively improve a blocking effect of the virtual occlusion.

Operation 104: Generate the virtual occlusion with the target size at the target position in the virtual scene.

At least one transparent channel arranged according to an arrangement rule may be set on the virtual occlusion.

The arrangement rule refers to a position at which the transparent channel may be placed on the virtual occlusion. A position relationship of different transparent channels on the virtual occlusion can be indicated through the arrangement rule.

For example, FIG. 10 is a schematic principle diagram 2 of a virtual ray processing method according to an embodiment of the present disclosure. FIG. 10 shows a surface 50 of a virtual occlusion. A transparent channel 51, a transparent channel 52, and a transparent channel 53 that may be arranged according to an arrangement rule may be set on the virtual occlusion 50. The arrangement rule may be that the transparent channel 51 may be below the transparent channel 52 and the transparent channel 53, the transparent channel 53 may be on the left of the transparent channel 52 and the transparent channel 51, or the like.

FIG. 6 is a schematic flowchart 4 of a virtual ray processing method according to an embodiment of the present disclosure, and operation 104 shown in FIG. 3 may be implemented by performing operation 1041 to operation 1044 shown in FIG. 6.

Operation 1041: Obtain an initial virtual occlusion with the target size.

A size type of the target size may include a two-dimensional target size and a three-dimensional target size. When the size type of the target size is the two-dimensional target size, the initial virtual occlusion may be a two-dimensional virtual occlusion, and when the size type of the target size is the three-dimensional target size, the initial virtual occlusion may be a three-dimensional virtual occlusion.

The initial virtual occlusion may be configured to block the virtual ray, and the virtual ray cannot pass through surfaces of the virtual occlusion.

Operation 1041 may be implemented in the following manner: obtaining the size type of the target size; and creating a two-dimensional virtual occlusion with the two-dimensional target size when the size type is the two-dimensional target size, the virtual ray emitted by the virtual light source being incapable of passing through the two-dimensional virtual occlusion; and determining the two-dimensional virtual occlusion as the initial virtual occlusion; or creating a three-dimensional virtual occlusion with the three-dimensional target size when the size type is the three-dimensional target size, the three-dimensional virtual occlusion being a polyhedron having a plurality of surfaces, and the virtual ray emitted by the virtual light source being incapable of passing through the surfaces of the polyhedron; and setting any one of the surfaces of the three-dimensional virtual occlusion as a transparent surface, to obtain the initial virtual occlusion, the virtual ray emitted by the virtual light source being capable of passing through the transparent surface.

In an example, when the size type is the two-dimensional target size, the two-dimensional virtual occlusion with the two-dimensional target size (for example, a length of 10 and a width of 20) may be created, and the virtual ray emitted by the virtual light source cannot pass through the two-dimensional virtual occlusion.

A geometry formed by several planar polygons may be referred to as a polyhedron. The polygon that forms the polyhedron may be referred to as a face of the polyhedron. A common edge of two faces may be referred to as an edge of the polyhedron. A common vertex of several edges may be referred to as a vertex of the polyhedron, and any face of the polyhedron may be extended, if other faces may be on a same side of the plane, the polyhedron may be referred to as a convex polyhedron. The polyhedron has at least four faces, and the polyhedron may be respectively referred to as a tetrahedron, a pentahedron, a hexahedron, and the like according to a quantity of faces.

The creating a three-dimensional virtual occlusion with the three-dimensional target size may be implemented in the following manner: in response to a selection operation for the polyhedron, determining a target quantity of faces in the polyhedron, and creating a polyhedron with a target quantity of faces and the three-dimensional target size.

In an example, a three-dimensional virtual occlusion with the three-dimensional target size may be created when the size type is the three-dimensional target size, the three-dimensional virtual occlusion may be a polyhedron having a plurality of surfaces, and the virtual ray emitted by the virtual light source cannot pass through the surfaces of the polyhedron; and any one of the surfaces of the three-dimensional virtual occlusion may be set as a transparent surface, to obtain the initial virtual occlusion, the virtual ray emitted by the virtual light source can pass through the transparent surface, and the virtual ray emitted by the virtual light source cannot pass through other surfaces than the transparent surface.

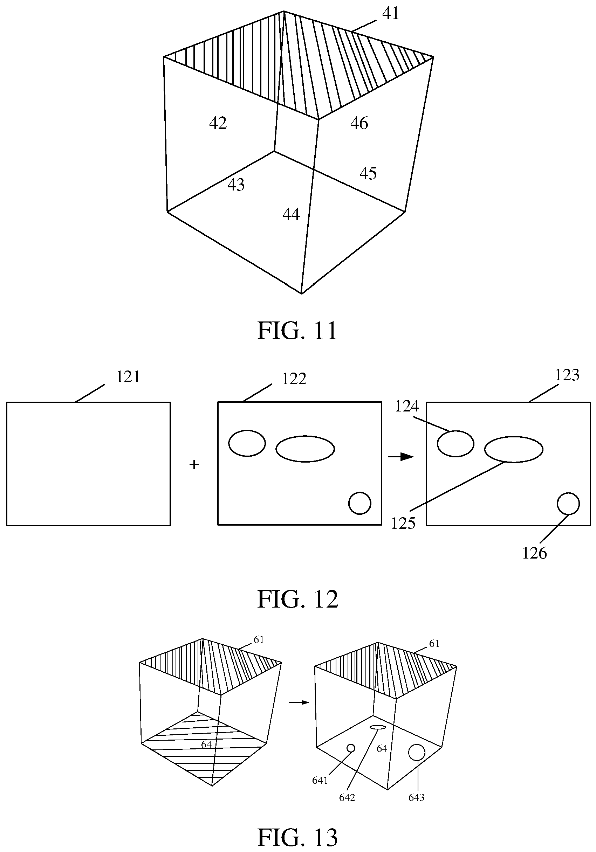

In an example, FIG. 11 is a schematic effect diagram of a three-dimensional virtual occlusion according to an embodiment of the present disclosure. When the size type is the three-dimensional target size, the three-dimensional virtual occlusion (for example, a hexahedron shown in FIG. 11) with the three-dimensional target size may be created. The three-dimensional virtual occlusion may be a hexahedron having six surfaces, and the virtual ray emitted by the virtual light source cannot pass through a surface of the hexahedron. Any surface of the three-dimensional virtual occlusion may be set to a transparent surface (for example, a surface 41 may be set to the transparent surface), to obtain an initial virtual occlusion. Referring to the initial virtual occlusion shown in FIG. 11, the surface 41 may be the transparent surface, a surface 42, a surface 43, a surface 44, a surface 45, and a surface 46 may be non-transparent surfaces. The virtual ray emitted by the virtual light source can pass through the transparent surface 41, and the virtual ray emitted by the virtual light source cannot pass through other surfaces (the surface 42, the surface 43, the surface 44, the surface 45, and the surface 46) than the transparent surface.

In this way, any surface of the three-dimensional virtual occlusion may be set to the transparent surface, to obtain the initial virtual occlusion, so that the virtual ray can enter inner space of the three-dimensional virtual occlusion through the transparent surface. Because the virtual ray emitted by the virtual light source cannot pass through other surfaces than the transparent surface, the virtual ray emitted by the virtual light source can be more effectively blocked, and another virtual ray caused by diffuse reflection of the virtual ray can be effectively blocked, thereby effectively improving the ray blocking effect of the virtual occlusion.

Operation 1042: Set, on the initial virtual occlusion, at least one transparent channel arranged according to the arrangement rule, to obtain the virtual occlusion.

In an example, referring to FIG. 10, the transparent channel 51, the transparent channel 52, and the transparent channel 53 that may be arranged according to the arrangement rule may be set on the initial virtual occlusion 50, to obtain the virtual occlusion.

Operation 1042 may be implemented in the following manner: obtaining a transparent channel map, the transparent channel map being configured for indicating the arrangement rule of the transparent channel and a channel shape of each transparent channel, and a map size of the transparent channel map matching the target size of the virtual occlusion; and setting the transparent channel on the initial virtual occlusion according to the arrangement rule indicated by the transparent channel map, to obtain the virtual occlusion.

After operation 1042, the virtual occlusion may further updated in the following manner: obtaining an updated transparent channel map in response to a pattern update operation for the virtual occlusion, an updated arrangement rule indicated by the updated transparent channel map being different from the arrangement rule indicated by the transparent channel map, and updating the virtual occlusion according to the arrangement rule indicated by the updated transparent channel, to obtain an updated virtual occlusion.

That the map size of the transparent channel map may match the target size of the virtual occlusion means that the map size of the transparent channel map may be less than or equal to the target size of the virtual occlusion, thereby ensuring that the map size of the transparent channel map can be adhered to the initial virtual occlusion.

In an example, referring to FIG. 10, the arrangement rule of the transparent channel may be a relative position relationship between different transparent channels such as the transparent channel 51 being below the transparent channel 52 and the transparent channel 53, the transparent channel 52 being on the left of the transparent channel 53, and the transparent channel 52 being on the right of the transparent channel 51. A channel shape of the transparent channel 51 may be circular, a channel shape of the transparent channel 52 may be oval, and a channel shape of the transparent channel 53 may be oval.

When the initial virtual occlusion is the two-dimensional virtual occlusion, the setting the transparent channel on the initial virtual occlusion according to the arrangement rule indicated by the transparent channel map, to obtain the virtual occlusion may be implemented in the following manner: arranging the transparent channel map on a surface of the two-dimensional virtual occlusion; determining an area on the surface of the two-dimensional virtual occlusion coinciding with the transparent channel of each channel shape in the transparent channel map as a target area; and setting each target area on the two-dimensional virtual occlusion to a transparent area, to obtain the virtual occlusion, the virtual ray emitted by the virtual light source being capable of passing through the transparent area.

In an example, FIG. 12 is a schematic principle diagram 1 of a two-dimensional virtual occlusion according to an embodiment of the present disclosure. A transparent channel map 121 may be arranged on a surface of a two-dimensional virtual occlusion 122. Areas (an area 124, an area 125, and an area 126) on the surface of the two-dimensional virtual occlusion coinciding with a transparent channel of each channel shape in the transparent channel map 122 may be determined as target areas. The target areas (the area 124, the area 125, and the area 126) on the two-dimensional virtual occlusion may be set to transparent areas, to obtain the virtual occlusion 123, and the virtual ray emitted by the virtual light source can pass through the transparent areas (the area 124, the area 125, and the area 126).

In some other embodiments, when the initial virtual occlusion is the three-dimensional virtual occlusion, the three-dimensional virtual occlusion may be a polyhedron, and the polyhedron may include a transparent surface, the setting the transparent channel on the initial virtual occlusion according to the arrangement rule indicated by the transparent channel map, to obtain the virtual occlusion may be implemented in the following manner: determining a blocking surface on the three-dimensional virtual occlusion farthest from the transparent surface as a target blocking surface; arranging the transparent channel map on the target blocking surface; determining an area on the target blocking surface coinciding with the transparent channel of each channel shape in the transparent channel map as a target area; and setting each target area on the target blocking surface on the three-dimensional virtual occlusion to a transparent area, to obtain the virtual occlusion, the virtual ray emitted by the virtual light source being capable of passing through the transparent area.

In an example, FIG. 13 is a schematic principle diagram of a three-dimensional virtual occlusion according to an embodiment of the present disclosure. A blocking surface 64 farthest from a transparent surface 61 in a three-dimensional virtual occlusion may be determined as a target blocking surface. The transparent channel map may be arranged on the target blocking surface 64. An area on the target blocking surface 64 coinciding with the transparent channel of each channel shape in the transparent channel map may be determined as a target area. Target areas (a target area 641, a target area 642, and a target area 643) on the target blocking surface on the three-dimensional virtual occlusion may be set to transparent areas, to obtain the virtual occlusion, and the virtual ray emitted by the virtual light source can pass through the transparent areas.

In this way, when the initial virtual occlusion is the three-dimensional virtual occlusion, and the three-dimensional virtual occlusion may be a polyhedron, the blocking surface on the three-dimensional virtual occlusion farthest from the transparent surface may be determined as the target blocking surface. The transparent channel map may be arranged on the target blocking surface. The area on the target blocking surface coinciding with the transparent channel of each channel shape in the transparent channel map may be determined as the target area. Each target area on the target blocking surface on the three-dimensional virtual occlusion may be set to the transparent area, to obtain the virtual occlusion, so that the virtual ray emitted by the virtual light source can pass through the transparent area. In this way, after passing through the transparent surface, the virtual ray can pass through the transparent area of the blocking surface farthest from the transparent surface, so that graphics satisfying the arrangement rule may be formed in the virtual scene, thereby effectively improving the ray display effect of the virtual ray.

Operation 1043: Setting the virtual occlusion at the target position in the virtual scene.

A geometric center point of the virtual occlusion coincides with the target position.

Operation 1043 may be implemented in the following manner: setting the center point of the virtual occlusion at a position coinciding with the target position.

Operation 1044: Set an orientation of the virtual occlusion at the target position to a direction opposite to a direction of the central virtual ray.

A direction of the central virtual ray may be a direction from the virtual light source to the corresponding virtual occlusion, so that the orientation of the virtual occlusion at the target position may be a direction from the virtual occlusion to the virtual light source. When the virtual occlusion is the two-dimensional virtual occlusion, an orientation of the two-dimensional virtual occlusion at the target position coincides with a normal direction of a plane on which the two-dimensional virtual occlusion may be located. When the virtual occlusion is the three-dimensional virtual occlusion, an orientation of the three-dimensional virtual occlusion at the target position coincides with a normal direction of a plane on which the target surface of the three-dimensional virtual occlusion may be located.

In an example, referring to FIG. 9, when the virtual occlusion is the two-dimensional virtual occlusion 91, an orientation of the two-dimensional virtual occlusion 91 at the target position coincides with a normal direction of a plane on which the two-dimensional virtual occlusion 91 may be located, and may be opposite to a direction of a central virtual ray.

In an example, referring to FIG. 13, when the virtual occlusion is the three-dimensional virtual occlusion, an orientation of the three-dimensional virtual occlusion at the target position coincides with a normal direction of a plane on which the target surface 64 of the three-dimensional virtual occlusion may be located.

Operation 105: Control the virtual light source to illuminate the virtual occlusion, to cause a virtual ray emitted by the virtual light source to pass through the transparent channel, and form graphics satisfying the arrangement rule in the virtual scene.

The virtual light source may be controlled to illuminate the virtual occlusion at the target position, so that the virtual ray emitted by the virtual light source can pass through the transparent channel on the virtual occlusion but cannot pass through another area on the virtual occlusion than the transparent channel, and the virtual ray passing through the transparent channel may be illuminated at a corresponding position in the virtual scene. Different transparent channels may be all transparent to the virtual ray, and may be corresponding positions to which the virtual ray may be illuminated in the virtual scene. Because the transparent channel satisfies the arrangement rule, a position to which the virtual ray passing through each transparent channel illuminates in the virtual scene also satisfies the arrangement rule, so that the arrangement rule may be set to form a lighting effect satisfying the arrangement rule.

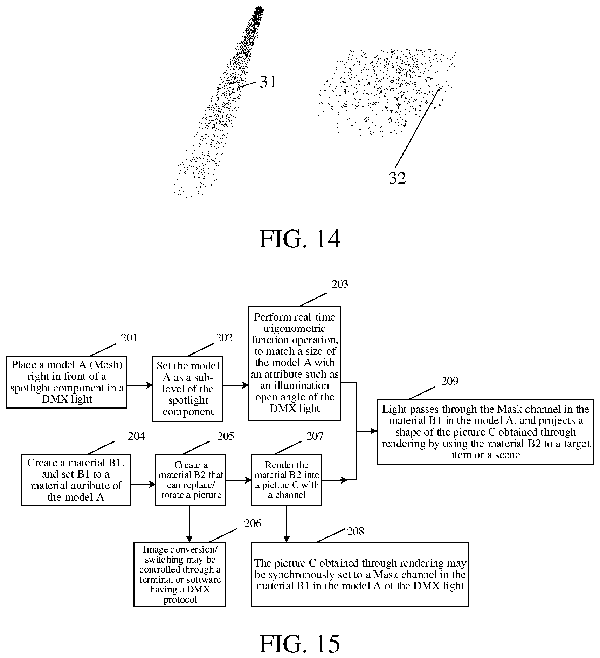

In an example, FIG. 14 is a schematic effect diagram of a virtual ray processing method according to an embodiment of the present disclosure. The virtual light source may be controlled to illuminate the virtual occlusion at the target position, so that the virtual ray emitted by the virtual light source can pass through the transparent channel on the virtual occlusion but cannot pass through another area on the virtual occlusion than the transparent channel, and a virtual ray 31 passing through the transparent channel may be illuminated at a corresponding position in the virtual scene. Different transparent channels may be all transparent to the virtual ray, and may be corresponding positions to which the virtual ray may be illuminated in the virtual scene. Because the transparent channel satisfies the arrangement rule, a position to which the virtual ray passing through each transparent channel illuminates in the virtual scene also satisfies the arrangement rule, so that the arrangement rule may be set to form a lighting effect 32 satisfying the arrangement rule.

In this way, a light source position and a light source parameter of the virtual light source may be obtained, the target size of the virtual occlusion may be determined based on the light source position and the light source parameter, the virtual occlusion with the target size may be generated at the target position in the virtual scene, and the virtual light source may be controlled to illuminate the virtual occlusion, so that the virtual ray emitted by the virtual light source passes through the transparent channel, to form graphics satisfying the arrangement rule in the virtual scene. In this way, the virtual occlusion with the target size may be placed at the target position in the virtual scene through physical parameters in the virtual scene such as the light source position and the light source parameter in the virtual scene. Because the virtual occlusion may be provided with the transparent channel arranged according to the arrangement rule, the virtual occlusion placed at the target position can selectively block the virtual ray, to form the graphics satisfying the arrangement rule in the virtual scene. Through the physical parameters in the virtual scene, the placed virtual occlusion can satisfy a blocking requirement of the virtual ray, and corresponding physical parameters of the virtual scene may be unchanged in different running environments, so that the placed virtual occlusion can be applicable to different running environments, thereby effectively improving universality of a running environment for processing a virtual ray.

The following describes an example application of this embodiment of the present disclosure in an application scenario in an actual virtual scene.

Virtual production gradually rises. Correspondingly, requirements for a virtual DMX light in the virtual production may be increasingly large, and especially in virtual performance and virtual human service, the requirements may be especially prominent. Pattern projection of a conventional virtual lamp uses virtual projection simulated based on an illumination function.

According to the virtual ray processing method provided in the embodiments of the present disclosure, a pattern projection manner can be used to project entirely based on a method of physical illumination of light in the Unreal Engine. This method may be applicable to all versions. A static mesh component matching properties such as an illumination open angle of a virtual light source may be produced, and a picture with a channel may be set on a transparent plane of the static mesh component, to obtain a to-be-used static mesh component, and the to-be-used static mesh component may be set right in front of an illumination direction of the virtual light source, so that a ray of the virtual light source can pass through each channel of the to-be-used static mesh component, to form a corresponding light effect.

FIG. 15 is a schematic flowchart 5 of a virtual ray processing method according to an embodiment of the present disclosure, and the virtual ray processing method provided in the embodiments of the present disclosure may be implemented by performing operation 201 to operation 209 shown in FIG. 15.

Operation 201: Place a model A (Mesh) right in front of a spotlight component in a DMX light.

The spotlight component in the DMX light may be the virtual light source described above, the model A may be the virtual occlusion described above, and the front direction may be the target position described above. A virtual occlusion with a target size may be generated at the target position in the virtual scene, so that the model A (Mesh) right may be placed in front of the spotlight component in the DMX light.

Operation 202: Set the model A as a sub-level of the spotlight component.

The model A may be the virtual occlusion described above. The virtual occlusion may be configured to block the virtual ray emitted by the virtual light source, and the virtual ray emitted by the virtual light source cannot pass through the blocking surface of the virtual occlusion.

Operation 203: Perform real-time trigonometric function operation, to match a size of the model A with an attribute such as an illumination open angle of the DMX light.

Through the real-time trigonometric function operation, the model A (namely, the target size of the virtual occlusion) may be determined, to obtain the target length between the target position and the light source position; a connection line between the target position and the light source position may be determined as a base line segment, and based on the boundary virtual ray, a target line segment perpendicular to the base line segment and intersecting with the boundary virtual ray may be determined; a length value of the target line segment may be determined based on the illumination open angle and the target length; and the target size of the virtual occlusion may be determined based on the length value.

The determining a length value of the target line segment based on the illumination open angle and the target length may be implemented in the following manner: obtaining an included angle between the boundary virtual ray and the target line segment, and determining a cosine value of the included angle; obtaining a cosine value of the illumination open angle, and determining a ratio of the cosine value of the illumination open angle to the cosine value of the included angle; and determining an integer multiple of a product of the target length and the ratio as the length value of the target line segment.

Operation 204: Create a material B1, and set B1 to a material attribute of the model A.

The material B1 may be the transparent channel map described above. When the model A is a two-dimensional virtual occlusion, the transparent channel map may be arranged on a surface of the two-dimensional virtual occlusion; an area on the surface of the two-dimensional virtual occlusion coinciding with the transparent channel of each channel shape in the transparent channel map may be determined as a target area; and each target area on the two-dimensional virtual occlusion may be set to a transparent area, to obtain the virtual occlusion, the virtual ray emitted by the virtual light source being capable of passing through the transparent area.

Operation 205: Create a material B2 that can replace/rotate a picture.

The material B2 and the material B1 may be transparent channel maps having different channel arrangement rules.

Operation 206: Image conversion/switching may be controlled through a terminal or software having a DMX Protocol.

Switching between the material B1 and the material B2 may be controlled by using a terminal having the DMX protocol or software. The DMX512 may be a digital dimming protocol. The DMX512 may be applied for performing digital control on dimmers and other control devices in places such as a stage, a theater, and a studio. The DMX512 may be applicable to a one-to-multiple-point master-slave control system. An interconnection form of the DMX512 adopts a multi-point bus structure. An information path may be not blocked, and a connection line may be simple and has high reliability.

Operation 207: Render the material B2 into a picture C with a channel.

Operation 208: The picture C obtained through rendering may be synchronously set to a Mask channel in the material B1 in the model A of the DMX light.

The transparent channel may be set on the initial virtual occlusion according to the arrangement rule indicated by the transparent channel map. In other words, the picture C obtained through rendering may be synchronously set to the Mask channel in the material B1 in the model A of the DMX light, to obtain the virtual occlusion.

Operation 209: Light passes through the Mask channel in the material B1 in the model A, and projects a shape of the picture C obtained through rendering by using the material B2 to a target item or a scene.

A plug-in of the UE may be outputted. The plug-in may include a type of DMX virtual light inheriting ADMX Fixture Actor and a new type of DMX light may be added. Compared with a native DMX light, new lights may be added. A material having a Mask channel may be specified for the static mesh component (named Gobo), to generate a physical projection of a light. RT Material Instance may be newly added, and may be configured to set and switch pattern content, render the pattern content into a Render Target, store the Render Target in a memory to be invoked for another function requiring the pattern content. When a material of the static mesh component named Gobo invokes the Render Target, the virtual light projects a physical projection at an illumination target position.

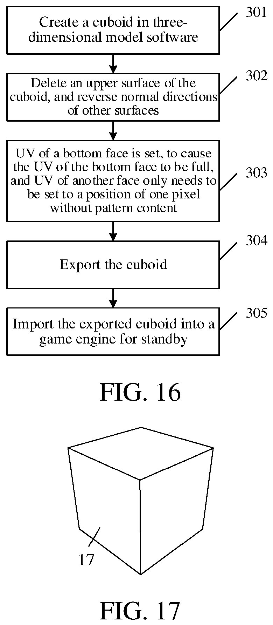

FIG. 16 is a schematic flowchart 6 of a virtual ray processing method according to an embodiment of the present disclosure, and production of the virtual occlusion may be implemented by performing operation 301 to operation 305 shown in FIG. 16.

Operation 301: Create a cuboid in three-dimensional model software.

In an example, FIG. 17 is a schematic principle diagram of a cuboid in a virtual ray processing method according to an embodiment of the present disclosure. A cuboid 17 may be created in the three-dimensional model software. For example, a cube may be created in 3D max or Maya light 3D model software, may be set to 100 cm by 100 cm by 100 cm in size, and may be named Gobo.

Operation 302: Delete an upper surface of the cuboid, and reverse normal directions of other surfaces.

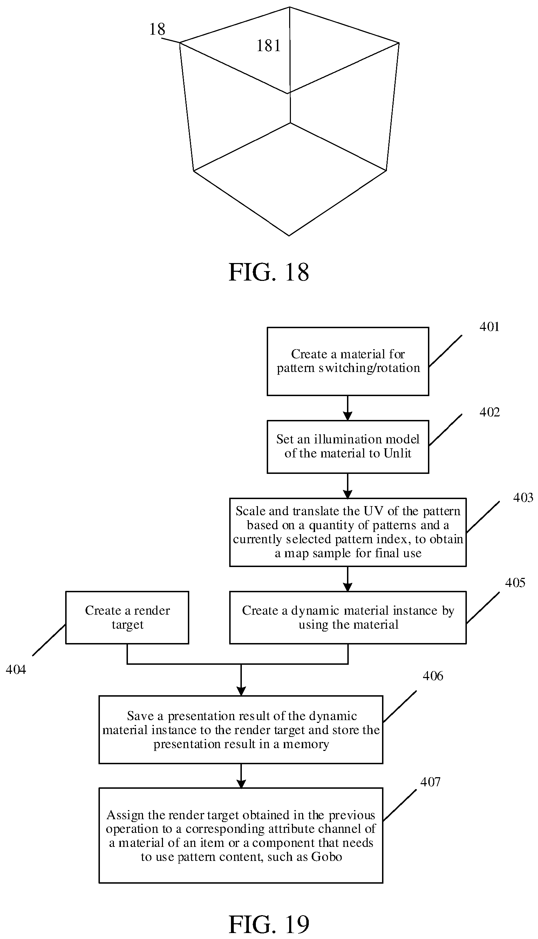

In an example, FIG. 18 is a schematic principle diagram 3 of a virtual ray processing method according to an embodiment of the present disclosure. An upper surface 181 of the cuboid 18 may be deleted, and normal directions of other surfaces may be reversed. A face above the cuboid may be deleted, and normal lines of the remaining five faces may be reversed. A reason why a bottom face may be reserved may be that in this embodiment of the present disclosure, a Mask may be to be produced on the bottom face, so that light can be projected. A reason why a side face may be reserved may be that the Mesh needs to be placed close to a light source. In this way, a problem of light leakage may be caused if only one plane may be used for producing the Mask. Therefore, a model of the side face may be needed to block the light leakage that may occur.

Operation 303: UV of the bottom face may be set, to cause the UV of the bottom face to be full, and UV of another face only needs to be set to a position of one pixel without pattern content.

The UV of the bottom surface may be set, to cause the UV of the bottom surface to be full, and the UV of another face only needs to be set to a position of one pixel without pattern content. The reason for this may be that in this embodiment of the present disclosure, only the bottom face needs to have a Mask and a side face does not need to have a Mask. Otherwise, in this embodiment of the present disclosure, there may be no function of blocking the light leakage by using the Mask.

Operation 304: Export the cuboid.

The cuboid created in the three-dimensional model software may be exported, and may be imported into a game engine for standby.

Operation 305: Import the exported cuboid into the game engine for standby.

An imported model may be placed right in front of the illumination direction of the spotlight component in the DMX light. For example, a distance may be set to 10, and a rotation value of the model A (Mesh) named Gobo (when used below, a corresponding target of the name Gobo needs to be used for the model A (Mesh)) may be set, so that a normal direction of a bottom face of the Gobo may be consistent with a direction of the light source.

A proper size of Gobo may be calculated in real time through the law of sines formula, by using a linear distance between the Mesh and the light source, and the illumination open angle of the light, and a Scale 3D attribute of Gobo may be set. A reason why the function may be set may be because the DMX light has a Zoom attribute, and the illumination open angle of light changes. However, the size of Gobo in this embodiment of the present disclosure needs to be changed in real time according to a change of Zoom, so that Gobo can always block an illumination range of the light exactly.

The law of sines formula may be:

$$\frac{a}{sinA} = \frac{b}{sinB} = \frac{c}{sinC} = 2R \qquad (3)$$

a may be configured for indicating a side length of a side a of a triangle, A may be configured for indicating a degree of an angle BAC of the triangle, b may be configured for indicating a side length of a side b of the triangle, B may be configured for indicating a degree of an angle ABC of the triangle, c may be configured for indicating a side length of a side c of the triangle, and C may be configured for indicating a degree of an angle ACB of the triangle.

A distance of the light source perpendicular to a bottom face of a Gobo may be set as h=10 (because in this embodiment of the present disclosure, it has been set that the distance between the light source and the bottom face of the Gobo may be 10), and because h may be a height of the Gobo that may be perpendicular to the bottom face of the Gobo, an angle A between h and the bottom face of the Gobo may be 90°. In this case, it can be learned based on an attribute of an angle of the light that a value of 1/2 of Zoom of the light may be B, and therefore, a degree C=90-B of a third angle of the triangle may be obtained based on a feature of the right triangle. It can be deduced from the foregoing information with reference to law of sines formula that a length formula of b may be as follows:

$$b=C*sinB/sinC=10*sinB/sin(90-B) \quad (4)$$

In the Unreal Engine, a unit of scaling of an item may be meter (m), and because in this embodiment of the present disclosure, 100 cm may be used when the Mesh named Gobo is produced, that is, the side length of the Gobe may be 1 m. Therefore, in this embodiment of the present disclosure, h needs to be divided by 100. In this case, a final length formula of b needs to be:

$$b=10/100*sinB/sin(90-B) \quad (5)$$

The result b obtained herein may be only 1/2 of an illumination range when the light illuminates the distance h from the light right in front of the light at a Zoom value of 2B. In this case, a width of Gobo needs to be 2b. Therefore, a finally calculated result b needs to be multiplied by 2, and may be applied to the Scale3D attribute of Gobo.

FIG. 19 is a schematic flowchart 7 of a virtual ray processing method according to an embodiment of the present disclosure, and production of a material for pattern change may be implemented by performing operation 401 to operation 407 shown in FIG. 19.

Operation 401: Create a material for pattern switching/rotation.

The created material may be the initial virtual occlusion described above. A transparent channel may be set on the initial virtual occlusion according to an arrangement rule indicated by the transparent channel map by using the created initial virtual occlusion, to obtain the virtual occlusion.

Operation 402: Set an illumination model of the material to Unlit.

The material does not need to receive illumination in this embodiment of the present disclosure. Therefore, a Shading Mode type of the material may be set to Unlit; and material logic may be created, and a UV of a pattern may be scaled and translated based on a quantity of patterns and a currently selected pattern index, to obtain a map sample for final use.

Operation 403: Scale and translate the UV of the pattern based on the quantity of patterns and the currently selected pattern index, to obtain the map sample for final use.

Operation 404: Create a dynamic material instance by using the material.

A Render Target may be created and named RT; and a dynamic material instance may be created based on a Mat_RT material, and the dynamic material instance may be named Mat_RT_Inst. The dynamic material instance Mat_RT_Inst may be rendered to RT, and may be stored in a memory. RT may be assigned to a Texture attribute in a material used by an item that needs to present a pattern, such as Gobo, Spotlighting, and Beam. Switching between two or more patterns may be performed at the same time, that is, a pattern superimposition effect. The following describes presentation of the pattern superimposition effect.

Operation 405: Create a render target.

Operation 406: Save a presentation result of the dynamic material instance to the render target and store the presentation result in the memory.

Operation 407: Assign the render target obtained in the previous operation to a corresponding attribute channel of a material of an item or a component that needs to use pattern content, such as Gobo.

In this way, a Mask projection manner may be used, so that the graphic projection manner can be implemented completely based on a method of physical illumination of light in the Unreal Engine and may be applicable to all versions, and may also be configured for presentation of a multi-pattern superimposition effect, for example, an effect of a double pattern disk of a moving head stage light.

In this way, a light source position and a light source parameter of the virtual light source may be obtained, the target size of the virtual occlusion may be determined based on the light source position and the light source parameter, the virtual occlusion with the target size may be generated at the target position in the virtual scene, and the virtual light source may be controlled to illuminate the virtual occlusion, so that the virtual ray emitted by the virtual light source passes through the transparent channel, to form graphics satisfying the arrangement rule in the virtual scene. In this way, the virtual occlusion with the target size may be placed at the target position in the virtual scene through physical parameters in the virtual scene such as the light source position and the light source parameter in the virtual scene. Because the virtual occlusion may be provided with the transparent channel arranged according to the arrangement rule, the virtual occlusion placed at the target position can selectively block the virtual ray, to form the graphics satisfying the arrangement rule in the virtual scene. Through the physical parameters in the virtual scene, the placed virtual occlusion can satisfy a blocking requirement of the virtual ray, and corresponding physical parameters of the virtual scene may be unchanged in different running environments, so that the placed virtual occlusion can be applicable to different running environments, thereby effectively improving universality of a running environment for processing a virtual ray.

In the embodiments of the present disclosure, relevant data such as virtual rays may be involved. When the data is applied to specific products or technologies, user permission or consent may be required, and collection, use, and processing of relevant data need to comply with relevant laws, regulations, and standards of relevant countries and regions.

The following continuously describe an exemplary structure of the virtual ray processing apparatus 455 provided as a software module. As shown in FIG. 2, the software module stored in the virtual ray processing apparatus 455 in the memory 450 may include: an obtaining module 4551, configured to obtain a light source position of a virtual light source configured to form a virtual ray in a virtual scene and a light source parameter of the virtual light source; a position determining module 4552, configured to determine a target position in the virtual scene based on the light source position, a connection line between the target position and the virtual light source coinciding with a central virtual ray, and the central virtual ray being a central virtual ray in a plurality of virtual rays emitted by the virtual light source; a size determining module 4553, configured to determine a target size of a virtual occlusion based on the light source parameter and the target position, the virtual occlusion being configured to block a virtual ray emitted by the virtual light source; a generation module 4554, configured to generate the virtual occlusion with the target size at the target position in the virtual scene, at least one transparent channel arranged according to an arrangement rule being set on the virtual occlusion; and a control module 4555, configured to control the virtual light source to illuminate the virtual occlusion, to cause a virtual ray emitted by the virtual light source to pass through the transparent channel, and form graphics satisfying the arrangement rule in the virtual scene.

The position determining module may be further configured to obtain a plurality of virtual rays emitted by the virtual light source and a target length, the target length being less than a length of the central virtual ray; and determine the central virtual ray from the plurality of virtual rays, and determine a position on the central virtual ray with a distance from the light source position equal to the target length as the target position.

The light source parameter may include an illumination open angle of the virtual light source, and the illumination open angle may be configured for indicating an angle between a boundary virtual ray and the central virtual ray that may be emitted by the virtual light source; and the size determining module may be further configured to obtain a target length between the target position and the light source position; determine a connection line between the target position and the light source position as a base line segment, and determine, based on the boundary virtual ray, a target line segment perpendicular to the base line segment and intersecting with the boundary virtual ray; determine a length value of the target line segment based on the illumination open angle and the target length; and determine the target size of the virtual occlusion based on the length value.

The size determining module may be further configured to obtain a target line perpendicular to the base line segment, and determine an intersection point between the boundary virtual ray and the target line; and determine a line segment from the intersection point on the target line to the target position as the target line segment.

The size determining module may be further configured to obtain an included angle between the boundary virtual ray and the target line segment, and determine a cosine value of the included angle; obtain a cosine value of the illumination open angle, and determine a ratio of the cosine value of the illumination open angle to the cosine value of the included angle; and determine an integer multiple of a product of the target length and the ratio as the length value of the target line segment.

The target size may include a two-dimensional target size or a three-dimensional target size; and the size determining module may be further configured to determine a dimension of the virtual occlusion in response to a dimension selection operation for the virtual occlusion; and determine the two-dimensional target size of the virtual occlusion based on the length value when the dimension of the virtual occlusion is two-dimensional; or determine the three-dimensional target size of the virtual occlusion based on the length value when the dimension of the virtual occlusion is three-dimensional.

The size determining module may be further configured to determine a shape of the virtual occlusion in response to a shape selection operation for the virtual occlusion; and when the shape of the virtual occlusion is a circle and the two-dimensional target size may include a radius of the circle, determine the length value as the radius of the circle; or when the shape of the virtual occlusion is a rectangle and the two-dimensional target size may include a side length of the rectangle, determine an integer multiple of the length value as the side length of the rectangle.

When the virtual occlusion is a cuboid, the three-dimensional target size may include a length, a height, and a width of the cuboid, and the size determining module may be further configured to determine a first integer multiple of the length value of the target line segment as the length of the cuboid, and determine a second integer multiple of the length value of the target line segment as the width of the cuboid; obtain an illumination intensity of the virtual light source, dividing the illumination intensity by a reference illumination intensity, and determine a division result as a target multiple of the length value of the target line segment; and determine the length value of the target multiple as the height of the cuboid.

The generation module may be further configured to obtain an initial virtual occlusion with the target size, and set, on the initial virtual occlusion, at least one transparent channel arranged according to the arrangement rule, to obtain the virtual occlusion; set the virtual occlusion at the target position in the virtual scene, a geometric center point of the virtual occlusion coinciding with the target position; and set an orientation of the virtual occlusion at the target position to a direction opposite to a direction of the central virtual ray.

The generation module may be further configured to obtain a size type of the target size; and create a two-dimensional virtual occlusion with the two-dimensional target size when the size type is the two-dimensional target size, the virtual ray emitted by the virtual light source being incapable of passing through the two-dimensional virtual occlusion; and determine the two-dimensional virtual occlusion as the initial virtual occlusion; or create a three-dimensional virtual occlusion with the three-dimensional target size when the size type is the three-dimensional target size, the three-dimensional virtual occlusion being a polyhedron having a plurality of surfaces, and the virtual ray emitted by the virtual light source being incapable of passing through the surfaces of the polyhedron; and set any one of the surfaces of the three-dimensional virtual occlusion as a transparent surface, to obtain the initial virtual occlusion, the virtual ray emitted by the virtual light source being capable of passing through the transparent surface.

The generation module may be further configured to obtain a transparent channel map, the transparent channel map being configured for indicating the arrangement rule of the transparent channel and a channel shape of each transparent channel, and a map size of the transparent channel map matching the target size of the virtual occlusion; and set the transparent channel on the initial virtual occlusion according to the arrangement rule indicated by the transparent channel map, to obtain the virtual occlusion.

When the initial virtual occlusion is the two-dimensional virtual occlusion, the generation module may be further configured to arrange the transparent channel map on a surface of the two-dimensional virtual occlusion; and determine an area on the surface of the two-dimensional virtual occlusion coinciding with the transparent channel of each channel shape in the transparent channel map as a target area; and set each target area on the two-dimensional virtual occlusion to a transparent area, to obtain the virtual occlusion, the virtual ray emitted by the virtual light source being capable of passing through the transparent area.

When the initial virtual occlusion is the three-dimensional virtual occlusion, the three-dimensional virtual occlusion may be a polyhedron, and the polyhedron may include a transparent surface, the generation module may be further configured to determine a blocking surface in the three-dimensional virtual occlusion farthest from the transparent surface as the target blocking surface; and arrange the transparent channel map on the target blocking surface; determine an area on the target blocking surface coinciding with the transparent channel of each channel shape in the transparent channel map as a target area; and set each target area on the target blocking surface on the three-dimensional virtual occlusion to a transparent area, to obtain the virtual occlusion, the virtual ray emitted by the virtual light source being capable of passing through the transparent area.

A computer program product is provided, including a computer program or computer-executable instructions, and the computer program or the computer-executable instructions are stored in a computer-readable storage medium. A processor of an electronic device reads the computer-executable instructions from the computer-readable storage medium, and executes the computer-executable instructions, to enable the electronic device to perform the virtual ray processing method.

A computer-readable storage medium is provided, having computer-executable instructions stored therein, the computer-executable instructions, when executed by a processor, invoking the processor to perform the provided virtual ray processing method, for example, the virtual ray processing method shown in FIG. 3.

The computer-readable storage medium may be a storage such as a read only memory (ROM), a random access memory (RAM), an erasable programmable read-only memory (EPROM), an electronic erasable programmable read-only memory (EEPROM), a flash memory, a magnetic surface memory, an optic disc, a CD-ROM, or the like; or may be various electronic devices including one of or any combination of the foregoing memories.

The computer-executable instructions may be written in a form of a program, software, a software module, a script, or code in any form of programming language (including compilation or interpretation language, or declarative or procedural language), and the computer-executable instructions may be deployed in any form, including being deployed as an independent program or being deployed as a module, component, subroutine, or another unit suitable for use in a computing environment.

In an example, the computer-executable instructions may, but do not necessarily, correspond to a file in a file system, and may be stored in a part of a file that saves another program or other data, for example, be stored in one or more scripts in a HyperText Markup Language (HTML) file, stored in a file that may be specially used for a program in discussion, or stored in a plurality of collaborative files (for example, be stored in files of one or more modules, subprograms, or code parts).

In an example, the computer-executable instructions may be deployed to be executed on one electronic device, on a plurality of electronic devices located at one site, or on a plurality of electronic devices distributed at a plurality of locations and connected by a communication network

In summary, the following beneficial effects may be achieved:

(1) A light source position and a light source parameter of a virtual light source may be obtained, a target size of a virtual occlusion may be determined based on the light source position and the light source parameter, the virtual occlusion with the target size may be generated at a target position in a virtual scene, and the virtual light source may be controlled to illuminate the virtual occlusion, so that a virtual ray emitted by the virtual light source passes through a transparent channel, to form graphics satisfying an arrangement rule in the virtual scene. In this way, the virtual occlusion with the target size may be placed at the target position in the virtual scene through physical parameters in the virtual scene such as the light source position and the light source parameter in the virtual scene. Because the virtual occlusion may be provided with the transparent channel arranged according to the arrangement rule, the virtual occlusion placed at the target position can selectively block the virtual ray, to form the graphics satisfying the arrangement rule in the virtual scene. The placed virtual occlusion can satisfy a blocking requirement of the virtual ray, and corresponding physical parameters of the virtual scene may be unchanged in different running environments, so that the placed virtual occlusion can be applicable to different running environments, thereby effectively improving universality of a running environment for processing a virtual ray.

(2) The virtual occlusion may be set to the three-dimensional virtual occlusion, and the height of the three-dimensional virtual occlusion may be set to a height positively correlated with the illumination intensity of the virtual light source, so that the three-dimensional virtual occlusion of an appropriate height can block a reflected virtual ray generated through diffuse reflection of the virtual ray of the virtual light source, to effectively improve a blocking effect of the virtual occlusion.

(3) When a selected dimension of the virtual occlusion is three-dimensional, the corresponding virtual occlusion may be a three-dimensional virtual occlusion. Because memory space occupation of the three-dimensional virtual occlusion in the virtual scene may be larger, but compared with the two-dimensional virtual occlusion, a plurality of side surfaces may be added to the three-dimensional virtual occlusion, so that the virtual ray emitted by the virtual light source can be more effectively blocked, and another virtual ray caused by diffuse reflection of the virtual ray can be effectively blocked, thereby effectively improving a ray blocking effect of the virtual occlusion.

(4) When a selected dimension of the virtual occlusion is two-dimensional, the corresponding virtual occlusion may be a two-dimensional virtual occlusion. Because memory space occupation of the two-dimensional virtual occlusion in the virtual scene may be less than memory space occupation of a three-dimensional virtual occlusion (in a case that an area of a bottom surface of the three-dimensional virtual occlusion may be equal to an area of the two-dimensional virtual occlusion), selecting the two-dimensional virtual occlusion to block the virtual ray emitted by the virtual light source can significantly reduce memory space occupation of the virtual scene, and effectively improve processing efficiency of the virtual ray.

(5) The target position in the virtual scene may be determined based on the light source position, facilitating subsequently setting a virtual occlusion at the target position, so that the virtual occlusion blocks the virtual ray emitted by the virtual light source. The manner of setting a physical occlusion in the virtual scene may be applicable to various application scenarios, and can effectively improve scene universality of processing a virtual ray.

(6) A Mask projection manner may be used, so that the graphic projection manner can be implemented completely based on a method of physical illumination of light in the Unreal Engine and may be applicable to all versions, and may also be configured for presentation of a multi-pattern superimposition effect, for example, an effect of a double pattern disk of a moving head stage light.

(7) Any surface of the three-dimensional virtual occlusion may be set to the transparent surface, to obtain the initial virtual occlusion, so that the virtual ray can enter inner space of the three-dimensional virtual occlusion through the transparent surface. Because the virtual ray emitted by the virtual light source cannot pass through other surfaces than the transparent surface, the virtual ray emitted by the virtual light source can be more effectively blocked, and another virtual ray caused by diffuse reflection of the virtual ray can be effectively blocked, thereby effectively improving the ray blocking effect of the virtual occlusion.

(8) When the initial virtual occlusion is the three-dimensional virtual occlusion, and the three-dimensional virtual occlusion may be a polyhedron, the blocking surface on the three-dimensional virtual occlusion farthest from the transparent surface may be determined as the target blocking surface. The transparent channel map may be arranged on the target blocking surface. The area on the target blocking surface coinciding with the transparent channel of each channel shape in the transparent channel map may be determined as the target area. Each target area on the target blocking surface on the three-dimensional virtual occlusion may be set to the transparent area, to obtain the virtual occlusion, so that the virtual ray emitted by the virtual light source can pass through the transparent area. In this way, after passing through the transparent surface, the virtual ray can pass through the transparent area of the blocking surface farthest from the transparent surface, so that graphics satisfying the arrangement rule may be formed in the virtual scene, thereby effectively improving the ray display effect of the virtual ray.

(9) The virtual light source may be controlled to illuminate the virtual occlusion at the target position, so that the virtual ray emitted by the virtual light source can pass through the transparent channel on the virtual occlusion but cannot pass through another area on the virtual occlusion than the transparent channel, and the virtual ray passing through the transparent channel may be illuminated at a corresponding position in the virtual scene. Different transparent channels may be all transparent to the virtual ray, and may be corresponding positions to which the virtual ray may be illuminated in the virtual scene. Because the transparent channel satisfies the arrangement rule, a position to which the virtual ray passing through each transparent channel illuminates in the virtual scene also satisfies the arrangement rule, so that the arrangement rule may be set to form a lighting effect satisfying the arrangement rule.

The foregoing descriptions are only an embodiment of the present disclosure and are not intended to limit the scope of protection of the present disclosure. Any modification, equivalent replacement, or improvement made within the spirit and scope of the present disclosure fall within the protection scope of the present disclosure.

## Claims

1. A method for processing a virtual ray-based image, comprising:

   obtaining a light source position of a virtual light source in a virtual scene and at least one light source parameter of the virtual light source, the virtual light source being configured to form a plurality of virtual rays;
   determining a target position in the virtual scene based on the light source position such that a connection line between the target position and the virtual light source coincides with a central virtual ray, the central virtual ray being arranget at a center of a plurality of virtual rays emitted by the virtual light source;
   determining a target size of a virtual occlusion based on the at least one light source parameter and the target position, the virtual occlusion being configured to block at least one first virtual rays of the plurality of virtual rays;
   generating the virtual occlusion with the target size at the target position in the virtual scene, at least one transparent channel, that is transparent to the plurality of virtual rays, being arranged on the virtual occlusion according to an arrangement rule,
   wherein the virtual light source is controlled to illuminate the plurality of virtual rays onto the virtual occlusion, to cause at least one second virtual rays of the plurality of virtual rays emitted by the virtual light source to pass through the at least one transparent channel, such that the at least one second virtual rays form graphics satisfying the arrangement rule in the virtual scene.

2. The method according to claim 1, wherein the determining a target position in the virtual scene based on the light source position comprises:

   obtaining the plurality of virtual rays emitted by the virtual light source and a target length, the target length being less than a length of the central virtual ray; and
   determining the central virtual ray from the plurality of virtual rays, and determining a position on the central virtual ray with a distance from the light source position equal to the target length as the target position.

3. The method according to claim 1 or 2, wherein the at least one light source parameter comprises an illumination open angle of the virtual light source, and the illumination open angle is configured for indicating an angle between the central virtual ray and a boundary virtual ray of the plurality of virtual rays; and the determining a target size of a virtual occlusion based on the at least one light source parameter and the target position comprises:

obtaining a target length between the target position and the light source position;

determining a connection line between the target position and the light source position as a base line segment, and determining, based on the boundary virtual ray, a target line segment perpendicular to the base line segment and intersecting with the boundary virtual ray;

determining a length value of the target line segment based on the illumination open angle and the target length; and

determining the target size of the virtual occlusion based on the length value.

4. The method according to any one of claims 1 to 3, wherein the determining, based on the boundary virtual ray, a target line segment perpendicular to the base line segment and intersecting with the boundary virtual ray comprises:

obtaining a target line perpendicular to the base line segment, and determining an intersection point between the boundary virtual ray and the target line; and

determining a line segment from the intersection point on the target line to the target position as the target line segment.

5. The method according to any one of claims 1 to 3, wherein the determining a length value of the target line segment based on the illumination open angle and the target length comprises:

obtaining an included angle between the boundary virtual ray and the target line segment, and determining a cosine value of the included angle;

obtaining a cosine value of the illumination open angle, and determining a ratio of the cosine value of the illumination open angle to the cosine value of the included angle; and

determining an integer multiple of a product of the target length and the ratio as the length value of the target line segment.

6. The method according to any one of claims 1 to 3, wherein the target size comprises a two-dimensional target size or a three-dimensional target size; and the determining the target size of the virtual occlusion based on the length value comprises:

determining a dimension of the virtual occlusion in response to a dimension selection operation for the virtual occlusion; and

determining the two-dimensional target size of the virtual occlusion based on the length value when the dimension of the virtual occlusion is two-dimensional; or determining the three-dimensional target size of the virtual occlusion based on the length value when the dimension of the virtual occlusion is three-dimensional.

7. The method according to any one of claims 1 to 6, wherein the determining the two-dimensional target size of the virtual occlusion based on the length value comprises:

determining a shape of the virtual occlusion in response to a shape selection operation for the virtual occlusion; and

determining, when the shape of the virtual occlusion is a circle and the two-dimensional target size comprises a radius of the circle, the length value as the radius of the circle; or

determining, when the shape of the virtual occlusion is a rectangle and the two-dimensional target size comprises a side length of the rectangle, an integer multiple of the length value as the side length of the rectangle.

8. The method according to any one of claims 1 to 6, wherein when the virtual occlusion is a cuboid, the three-dimensional target size comprises a length, a height, and a width of the cuboid, and the determining the three-dimensional target size of the virtual occlusion based on the length value comprises:

determining a first integer multiple of the length value of the target line segment as the length of the cuboid, and determining a second integer multiple of the length value of the target line segment as the width of the cuboid;

obtaining an illumination intensity of the virtual light source, dividing the illumination intensity by a reference illumination intensity, and determining a division result as a target multiple of the length value of the target line segment; and

determining the length value of the target multiple as the height of the cuboid.

9. The method according to any one of claims 1 to 8, wherein the generating the virtual occlusion with the target size at the target position in the virtual scene comprises:

obtaining an initial virtual occlusion with the target size, and setting, on the initial virtual occlusion, at least one transparent channel arranged according to the arrangement rule, to obtain the virtual occlusion;

setting the virtual occlusion at the target position in the virtual scene, a geometric center point of the virtual occlusion coinciding with the target position; and

setting an orientation of the virtual occlusion at the target position to a direction opposite to a direction of the central virtual ray.

**10.** The method according to any one of claims 1 to 9, wherein the obtaining an initial virtual occlusion with the target size comprises:

obtaining a size type of the target size; and creating a two-dimensional virtual occlusion with the two-dimensional target size when the size type is the two-dimensional target size, the virtual ray emitted by the virtual light source being incapable of passing through the two-dimensional virtual occlusion; and determining the two-dimensional virtual occlusion as the initial virtual occlusion; or creating a three-dimensional virtual occlusion with the three-dimensional target size when the size type is the three-dimensional target size, the three-dimensional virtual occlusion being a polyhedron having a plurality of surfaces, and the virtual ray emitted by the virtual light source being incapable of passing through the surfaces of the polyhedron; and setting any one of the surfaces of the three-dimensional virtual occlusion as a transparent surface, to obtain the initial virtual occlusion, the virtual ray emitted by the virtual light source being capable of passing through the transparent surface.

**11.** The method according to any one of claims 1 to 9, wherein the setting, on the initial virtual occlusion, at least one transparent channel arranged according to the arrangement rule, to obtain the virtual occlusion comprises:

obtaining a transparent channel map, the transparent channel map being configured for indicating the arrangement rule of the transparent channel and a channel shape of each transparent channel, and a map size of the transparent channel map matching the target size of the virtual occlusion; and setting the transparent channel on the initial virtual occlusion according to the arrangement rule indicated by the transparent channel map, to obtain the virtual occlusion.

**12.** The method according to any one of claims 1 to 11, wherein when the initial virtual occlusion is the two-dimensional virtual occlusion, the setting the transparent channel on the initial virtual occlusion according to the arrangement rule indicated by the transparent channel map, to obtain the virtual occlusion comprises:

arranging the transparent channel map on a surface of the two-dimensional virtual occlusion;

determining an area on the surface of the two-dimensional virtual occlusion coinciding with the transparent channel of each channel shape in the transparent channel map as a target area; and setting each target area on the two-dimensional virtual occlusion to a transparent area, to obtain the virtual occlusion, the virtual ray emitted by the virtual light source being capable of passing through the transparent area.

**13.** The method according to any one of claims 1 to 11, wherein when the initial virtual occlusion is the three-dimensional virtual occlusion, the three-dimensional virtual occlusion is a polyhedron, and the polyhedron comprises a transparent surface, the setting the transparent channel on the initial virtual occlusion according to the arrangement rule indicated by the transparent channel map, to obtain the virtual occlusion comprises:

determining a blocking surface on the three-dimensional virtual occlusion farthest from the transparent surface as a target blocking surface; arranging the transparent channel map on the target blocking surface; determining an area on the target blocking surface coinciding with the transparent channel of each channel shape in the transparent channel map as a target area; and setting each target area on the target blocking surface on the three-dimensional virtual occlusion to a transparent area, to obtain the virtual occlusion, the virtual ray emitted by the virtual light source being capable of passing through the transparent area.

**14.** An apparatus for processing a virtual ray-based image, comprising:

an obtaining module, configured to obtain a light source position of a virtual light source configured to form a plurality of virtual rays in a virtual scene and at least one light source parameter of the virtual light source; a position determining module, configured to determine a target position in the virtual scene based on the light source position such that a connection line between the target position and the virtual light source coincides with a central virtual ray, and the central virtual ray being arranged at a center in a plurality of virtual rays emitted by the virtual light source; a size determining module, configured to determine a target size of a virtual occlusion based on the at least one light source parameter and the target position, the virtual occlusion being configured to block at least one first virtual rays of the plurality of virtual rays;

a generation module, configured to generate the virtual occlusion with the target size at the target position in the virtual scene, at least one transparent channel that is transparent to the plurality of virtual rays being set on the virtual occlusion according to an arrangement rule,

wherein the virtual light source is controlled to illuminate the plurality of virtual rays onto the virtual occlusion, to cause at least one second virtual rays of the plurality of virtual rays emitted by the virtual light source to pass through the at least one transparent channel, such that the at least one second virtual rays form graphics satisfying the arrangement rule in the virtual scene.

15. An electronic device, comprising:

a memory, configured to store computer-executable instructions or a computer program; and
a processor, configured to: implement, when executing the computer-executable instructions or the computer program stored in the memory, the virtual ray processing method according to any one of claims 1 to 13.

16. A computer-readable storage medium, having computer-executable instructions stored therein, the computer-executable instructions, when executed by a processor, implementing the virtual ray processing method according to any one of claims 1 to 13.

17. A computer program product, comprising a computer program or computer-executable instructions, the computer program or the computer-executable instructions, when executed by a processor, implementing the virtual ray processing method according to any one of claims 1 to 13.

100 ⟶

Server 200

Network 300

400

410-1

410

App

## FIG. 1

Electronic device 500 ⟶

Memory 450

Operating system 451

Network communication module 452

Network interface 420

Virtual ray processing apparatus 455

Processor 430

| Obtaining module 4551 |
|---|
| Position determining module 4552 |
| Size determining module 4553 |
| Generation module 4554 |
| Control module 4555 |

440

## FIG. 2

Obtain a light source position of a virtual light source configured to form a virtual ray in a virtual scene and a light source parameter of the virtual light source ⟶ 101

Determine a target position in the virtual scene based on the light source position ⟶ 102

Determine a target size of a virtual occlusion based on the light source parameter and the target position ⟶ 103

Generate the virtual occlusion with the target size at the target position in the virtual scene ⟶ 104

Control the virtual light source to illuminate the virtual occlusion, to cause a virtual ray emitted by the virtual light source to pass through a transparent channel, and form graphics satisfying an arrangement rule in the virtual scene ⟶ 105

## FIG. 3

Determine a target position in a virtual scene based on a light source position — 102

Obtain a plurality of virtual rays emitted by a virtual light source and a target length — 1021

Determine a central virtual ray from the plurality of virtual rays, and determine a position on the central virtual ray with a distance from the light source position equal to the target length as the target position — 1022

## FIG. 4

Determine a target size of a virtual obstruction based on a light source parameter and a target position — 103

Obtain a target length between a target position and a light source position — 1031

Determine a connection line between the target position and the light source position as a base line segment — 1032

Determine, based on a boundary virtual ray, a target line segment perpendicular to the base line segment and intersecting with the boundary virtual ray — 1033

Determine a length value of the target line segment based on an illumination open angle and the target length — 1034

Determine the target size of the virtual occlusion based on the length value — 1035

## FIG. 5

Generate a virtual obstruction with a target size at a target position in a virtual scene — 104

Obtain an initial virtual occlusion with the target size — 1041

Set, on the initial virtual occlusion, at least one transparent channel arranged according to an arrangement rule, to obtain a virtual occlusion — 1042

Set the virtual occlusion at the target position in the virtual scene — 1043

Set an orientation of the virtual occlusion at the target position to a direction opposite to a direction of a central virtual ray — 1044

## FIG. 6

FIG. 7

FIG. 8

FIG. 9

FIG. 10

41

42    46

43    45

44

FIG. 11

121    122    123
124

+    →

125

126

FIG. 12

61    61

64    64
641
642    643

FIG. 13

FIG. 14

FIG. 15

```
┌────────────────────────────────┐
│   Create a cuboid in three-    │  ╱ 301
│  dimensional model software    │
└────────────────────────────────┘
               │
               ▼
┌────────────────────────────────┐
│   Delete an upper surface of the │  ╱ 302
│ cuboid, and reverse normal directions│
│         of other surfaces      │
└────────────────────────────────┘
               │
               ▼
┌────────────────────────────────┐
│ UV of a bottom face is set, to cause │
│ the UV of the bottom face to be full,│  ╱ 303
│ and UV of another face only needs to │
│  be set to a position of one pixel   │
│      without pattern content     │
└────────────────────────────────┘
               │
               ▼
┌────────────────────────────────┐
│                                │  ╱ 304
│       Export the cuboid        │
│                                │
└────────────────────────────────┘
               │
               ▼
┌────────────────────────────────┐
│ Import the exported cuboid into a │  ╱ 305
│     game engine for standby    │
└────────────────────────────────┘
```

FIG. 16

FIG. 17

18    181

FIG. 18

Create a material for
pattern switching/rotation    401

Set an illumination model
of the material to Unlit    402

Scale and translate the UV of the pattern
based on a quantity of patterns and a
currently selected pattern index, to obtain
a map sample for final use    403

Create a render
target    404

Create a dynamic material instance by
using the material    405

Save a presentation result of the dynamic
material instance to the render target and store the
presentation result in a memory    406

Assign the render target obtained in the previous
operation to a corresponding attribute channel of
a material of an item or a component that needs
to use pattern content, such as Gobo    407

FIG. 19

## INTERNATIONAL SEARCH REPORT

| International application No. |
|---|
| **PCT/CN2024/081856** |

### A. CLASSIFICATION OF SUBJECT MATTER

G06T 15/50(2011.01)i

According to International Patent Classification (IPC) or to both national classification and IPC

### B. FIELDS SEARCHED

Minimum documentation searched (classification system followed by classification symbols)

IPC: G06T, G06F

Documentation searched other than minimum documentation to the extent that such documents are included in the fields searched

Electronic data base consulted during the international search (name of data base and, where practicable, search terms used)

CNABS, CNTXT, CNKI, BAIDU, VEN, WOTXT, EPTXT, USTXT, IEEE: 虚拟, 光线, 光源, 障碍物, 场景, 遮挡, 位置, 尺寸, 通道, 洞, 孔, 穿透, 透过, 图形, 效果, virtual, light, light source, obstacle, scene, block, position, size, channel, hole, aperture, penetration, graphic, effect

### C. DOCUMENTS CONSIDERED TO BE RELEVANT

| Category* | Citation of document, with indication, where appropriate, of the relevant passages | Relevant to claim No. |
|---|---|---|
| PX | CN 116597069 A (TENCENT TECHNOLOGY (SHENZHEN) CO., LTD.) 15 August 2023 (2023-08-15) claims 1-17 | 1-17 |
| A | CN 114299220 A (TENCENT TECHNOLOGY (CHENGDU) CO., LTD.) 08 April 2022 (2022-04-08) description, paragraphs 34-81 | 1-17 |
| A | CN 112927341 A (TENCENT TECHNOLOGY (SHENZHEN) CO., LTD.) 08 June 2021 (2021-06-08) entire document | 1-17 |
| A | CN 115375828 A (TENCENT TECHNOLOGY (SHENZHEN) CO., LTD.) 22 November 2022 (2022-11-22) entire document | 1-17 |
| A | US 11245889 B1 (TANZLE, INC.) 08 February 2022 (2022-02-08) entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 May 2024** | **30 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/081856**

| Patent document cited in search report | | | Publication date (day/month/year) | Patent family member(s) | | | Publication date (day/month/year) |
|---|---|---|---|---|---|---|---|
| CN | 116597069 | A | 15 August 2023 | None | | | |
| CN | 114299220 | A | 08 April 2022 | None | | | |
| CN | 112927341 | A | 08 June 2021 | HK | 40046380 | A0 | 05 November 2021 |
| | | | | WO | 2022206380 | A1 | 06 October 2022 |
| | | | | US | 2023076326 | A1 | 09 March 2023 |
| CN | 115375828 | A | 22 November 2022 | None | | | |
| US | 11245889 | B1 | 08 February 2022 | US | 11606546 | B1 | 14 March 2023 |
| | | | | US | 11936840 | B1 | 19 March 2024 |

Form PCT/ISA/210 (patent family annex) (July 2022)

**REFERENCES CITED IN THE DESCRIPTION**

**Patent documents cited in the description**

- CN 202310589460